# EUROPEAN PATENT APPLICATION

(11) **EP 4 748 586 A1**
(43) Date of publication of application: **27.05.2026**
(21) Application number: 25217805.8
(22) Date of filing: 21.11.2025
(51) Int. Cl.: B60B 21/02, B60B 21/12, B60B 31/00

(54) **BICYCLE TAPE APPLICATOR**

(30) Priority: 21.11.2024 US 202463723575 P; 05.11.2025 US 202519380226
(71) Applicant: ENVE Composites, LLC, Ogden UT 84401 (US)
(72) Inventor: NEPERUD, Scott, Odgen, 84401 (US); NELSON, Kevin, Ogden, 84401 (US); LONG, Martyn, Odgen, 84401 (US)
(74) Representative: Marks & Clerk LLP

(57) **Abstract**

A bicycle tape applicator includes a portable housing for being manually moved along a bicycle rim, a tape roll holder supported by the housing, a rim guide at a front of the housing, and a tape press at a rear of the housing.

## Description

### CROSS-REFERENCE TO RELATED PATENT APPLICATIONS

The present application claims the benefit from co-pending US provisional patent Application Serial No. 63/723,575 (Atty. Dkt. No. ENV-102-NP), filed November 21, 2024, by Long et al. and entitled BICYCLE TAPE APPLICATOR, the full disclosure of which is hereby incorporated by reference.

### BACKGROUND

Tubeless bicycle tires do not require inner tubes. Such tires are seated within a channel of a bicycle wheel rim so as to form a seal. Tape is typically applied to the interior of the channel to assist with the seal.

### SUMMARY

An aspect of the present disclosure relates to a bicycle tape applicator comprising: a portable housing for being manually moved along a bicycle rim; a tape roll holder supported by the portable housing; a rim guide; and a tape press. The rim guide may be at a front of the housing. The tape press may be at a rear of the housing.

The rim guide may comprise a wheel rotatably supported by the housing. The rim guide may have an outer surface including opposite taper surfaces.

The bicycle rim may comprise a floor. The bicycle rim may comprise a first side wall rising from the floor. The bicycle rim may comprise a second side wall rising from the floor. The rim guide may comprise a surface configured to contact and move along the first side wall as tape from a held tape roll is applied to the rim. The rim guide may further comprise a second surface contacting moving along the second side wall as tape from the held tape roll is applied to the rim.

The tape press may comprise a pressing wheel rotatably supported by the housing. The pressing wheel may be rotatably supported about a pressing wheel rotational axis. The rim guide may have a first width. The pressing wheel may have a second width less than the first width. The second width may be no greater than 50% of the first width.

The bicycle tape applicator may be configured to apply a tape to an interior of the bicycle rim.

The bicycle rim may comprise a recessed channel extending from and below the floor. The tape press may be configured to be at least partially received within the recessed channel to press the tape into the recessed channel.

The bicycle tape applicator may comprise a tape tensioner configured to peal tape from a tape roll held by the tape roll holder. The tape tensioner may be configured to place the tape in tension as a line of the tape extends from across the tape tensioner to the tape press.

The tape tensioner and the tape press may be relatively positioned to support the line of tape at an angle of at least 85° and no greater than 95° with respect to a line intersecting a rotational axis of the rim and a channel floor contacting surface of the tape press.

The tape tensioner and the tape press may be relatively positioned to support the line of the tape at an angle of at least 85° and no greater than 95° with respect to a line intersecting the rotational axis of the rim and the rotational axis of the pressing wheel.

The tape roll holder may be configured to center a held tape roll with respect to the tape press.

The tape roll holder may comprise a pair of opposite tapered sloping symmetrical faces configured to engage opposite outer edges of the held tape roll.

The tape roll holder may comprise a hub configured to project into a center of a held tape roll. The hub may comprise opposing tapered sloping symmetrical faces about a centerline of the tape press and configured to engage opposite inner edges of the tape roll held by the tape roll holder to center the tape roll relative to the tape press.

The hub may be releasably connected to the housing. The hub may comprise two fingers having outer ends. The hub may comprise three fingers having outer ends. The outer ends may be configured to engage the held tape roll. At least one of the fingers may be radially movable. At least one of the fingers may be resiliently moveable in a radial outward direction.

The tape roll holder may comprise opposing parallel faces configured to extend perpendicular to a rotational axis of the held tape roll while engaging opposite sides of the held tape roll.

The bicycle tape applicator may further comprise a tape cutter supported by the housing. The tape cutter may comprise a tape cutting edge. The tape cutter may comprise a cutter support carrying the tape cutting edge and rotatably supported by the housing for rotation about an axis between a tape disengaged position in which the tape cutting edge is withdrawn from tape held by the tape roll holder and a tape cutting position in which the tape cutting edge cuts the tape. The tape cutter may comprise a bias mechanism applying a resilient bias to the cutter support towards the tape disengaged position. The tape cutter may comprise a rim bumper carried by the cutter support and configured to contact the bicycle rim in response to rotation of the housing about the axis, wherein contact of the rim bumper with the bicycle rim rotates the cutter support relative to the housing against the resilient bias to move the cutting edge to the tape cutting position.

The rim guide may comprise a wheel rotatably supported by the housing.

The rim guide may comprise a center aligned with a vertical midplane of the wheel and opposite taper surfaces tapering away from opposite sides of the vertical midplane.

The rim guide may comprise a body fixed to the housing and shaped to include the opposite taper surfaces.

The opposite taper surfaces may be linear.

The opposite taper surfaces may be curved.

The rim guide may comprise a guide wheel rotatably supported by the housing, the guide wheel having an outer surface including the opposite taper surfaces.

The rim may comprise a floor. The rim may comprise a first side wall rising from the floor. The rim may comprise a second side wall rising from the floor. The rim guide may comprise a surface configured to contact and move along the first side wall as tape from a held tape roll is applied to the rim.

The rim guide may further comprise a second surface contacting moving along the second side wall as tape from the held tape roll is applied to the rim.

The bicycle tape applicator may further comprise a first prong extending from the housing and providing the surface. The bicycle tape applicator may further comprise a second prong extending from the housing and providing the second surface.

The surface and the second surface may contact an interior side of the first side wall and the second side wall, respectively.

The surface and the second surface may contact an exterior side of the first side wall and the second side wall, respectively.

The surface and the second surface may comprise symmetrical tapered sloped surfaces configured to contact and slide along interior sides of the first side wall and the second side wall, respectively.

The bicycle tape applicator may further comprise a prong extending from the housing, the prong providing the surface.

The tape press may comprise a pressing wheel rotatably supported by the housing.

The rim guide may have a first width. The pressing wheel may have a second width less than the first width.

The second width may be no greater than 50% of the first width.

The rim guide may have a first width. The tape press may comprise a pressing finger having a second width less than the first width.

The second width may be no greater than 50% of the first width.

The bicycle tape applicator may be configured to apply a tape to an interior of a bicycle rim having a floor and a recessed channel extending from and below the floor. The tape press may be configured to be at least partially received within the recessed channel to press the tape into the recessed channel.

The bicycle tape applicator may further comprise a tape tensioner configured to peal tape from a tape roll held by the tape roll holder. The tape tensioner may be configured to place the tape in tension as a line of the tape extends from across the tape tensioner to the tape press.

The tape tensioner and the tape press may be relatively positioned to support the tape line at an angle of at least 85° and no greater than 95° with respect to a line intersecting a rotational axis of the rim and a channel floor contacting surface of the tape press.

The tape tensioner may comprise a fixed tape bar supported by the housing.

The tape tensioner may comprise a roller rotatably supported by the housing.

The bicycle tape applicator may further comprise a tape tensioner configured to peal tape from a tape roll held by the tape roll holder. The tape tensioner may be configured to place the tape in tension as a line of the tape extends from across the tape tensioner to the tape press. The tape press may comprise a pressing wheel rotatably supported about a pressing wheel rotational axis by the housing. The tape tensioner and the tape press may be relatively positioned to support the tape line at an angle of at least 85° and no greater than 95° with respect to a line intersecting the rotational axis of the rim and the rotational axis of the pressing wheel.

The tape roll holder may be configured to center a held tape roll with respect to the tape press.

The tape roll holder may comprise a pair of opposite tapered sloping symmetrical faces configured to engage opposite outer edges of the held tape roll.

The tape roll holder may comprise opposing tapered sloping symmetrical faces about a centerline of the tape press and configured to engage opposite outer edges of the tape roll held by the tape roll holder to center the tape roll relative to the tape press.

The tape roll holder may comprise a hub configured to project into a center of a held tape roll. The hub may comprise opposing tapered sloping symmetrical faces about a centerline of the tape press and configured to engage opposite inner edges of the tape roll held by the tape roll holder to center the tape roll relative to the tape press.

The hub may comprise three fingers having outer ends configured to engage the held tape roll, a first one of the three fingers being radially movable.

The hub may be releasably connected to the housing. The hub may comprise two fingers having outer ends. At least one of the fingers may be resiliently movable in a radial outward direction.

The tape roll holder may comprise opposing parallel faces configured to extend perpendicular to a rotational axis of a held tape roll while engaging opposite sides of the held tape roll.

The tape roll holder may comprise tape block configured to extend through a held tape roll. The block may have a pair of opposite tapered sloping symmetrical faces configured to engage opposite inner edges of the held tape roll. The tape block may be resiliently biased towards the opposite inner edges.

The tape roll holder may comprise a plurality of roll bars rotatably supported by the housing. The plurality roll bars may be spaced to contact circumferential faces of a held tape roll. The tape roll holder may comprise a tape roll centering clamping bar releasably connected to the housing while being configured to extend through a center of a held tape roll, engaging opposite side edges of the held tape roll.

The tape roll holder may further comprise at least one tape roll centering block having a pair of opposite tapered sloping symmetrical faces configured to engage opposite inner edges of the held tape roll. The tape block may be resiliently biased towards the opposite inner edges.

The bicycle tape applicator may comprise a tape cutter supported by the housing.

The tape cutter may comprise a cutting blade carried by the housing. The cutting blade may be movable between an extended position projecting from the housing and a retracted position contained within the housing.

The tape cutter may comprise a tape cutting edge. The tape cutter may comprise a cutter support carrying the tape cutting edge and rotatably supported by the housing for rotation about an axis between a tape disengaged position in which the tape cutting edge is withdrawn from tape held by the tape roll holder and a tape cutting position in which the tape cutting edge cuts the tape.

The tape cutter may comprise a bias mechanism applying a resilient bias to the cutter support towards the tape disengaged position.

The tape cutter may comprise a rim bumper carried by the cutter support and configured to contact the bicycle rim in response to rotation of the housing about the axis. Contact of the rim bumper with the bicycle rim may rotate the cutter support relative to the housing against the bias to move the cutting edge to the tape cutting position.

The bicycle tape applicator may be part of a bicycle tape application system that further comprises a tape roll of tape held by the tape roll holder.

The tape may have a sticky face and a non-sticky face. The bicycle tape applicator may further comprise a tape tensioner configured to peal the tape from the tape roll held by the tape roll holder. The tape tensioner may be in contact with the non-sticky face of the tape. The tape tensioner may be configured to place the tape in tension as a line of the tape extends from across the tape tensioner to the tape press.

The tape roll holder may be configured to removably receive a cartridge containing a tape roll of tape.

The bicycle tape applicator may be part of a bicycle tape application system further comprising a cartridge. The cartridge may contain a tape roll of tape. The cartridge may contain a tape tensioner pealing the tape from the tape roll and configured to place the tape in tension as a line of the tape extends from across the tape tensioner to the tape press. The tape roll holder may be configured to releasably secure the cartridge to the housing.

The bicycle tape applicator may have a weight of less than 7 pounds.

The bicycle tape applicator may further comprise a tape roll of tape held by the tape roll holder.

The bicycle tape applicator may be configured to be manually held and moved about the bicycle wheel rim or manually held as a bicycle wheel rim is rotated with respect to the applicator. The bicycle tape applicator may have a weight and size that facilitate such manual use. The bicycle tape applicator may have a weight of less than 7 pounds and, in some implementations, less than 5 pounds. The bicycle tape applicator may not require any motors, pumps or electrical power, either from an electrical outlet or from a battery. The bicycle tape applicator may be configured to rely solely upon manually applied power and force. The bicycle tape applicator may be used in remote locations or other locations where access to electrical power is not available or at times when a charged battery is not available.

The tape roll holder may removably receive a tape roll of tape. The tape roll holder removably may receive a cartridge containing or supporting a tape roll of tape. The tape roll holder permanently or non-removably holds a roll of tape.

The tape roll holder may engage the interior circumferential surface or interior circumferential edges of a cylindrical spool supporting the tape which is wound or wrapped about the spool. The tape roll holder may engage an outer circumferential surface of the tape roll. For example, the tape roll holder may comprise one or more cylindrical roll bars or cylinders about the tape roll and against which the tape roll rotates. In some implementations, the tape roll holder may comprise a curved or rounded surface against which the tape roll holder may roll and slide.

The tape roll holder may be configured to center the tape roll relative to a centerline of the applicator while the centerline of the applicator is also centered with respect to a centerline of the bicycle wheel rim and its channel as the bicycle tape applicator is manually moved about the bicycle wheel rim. As should be appreciated, in every instance where the bicycle tape applicator described as being manually moved about the bicycle wheel rim during the application of the tape, the bicycle tape applicator may alternatively be manually held and positioned as the bicycle wheel rim is rotated relative to the manually held bicycle tape applicator. The centerline of the applicator may be located in a plane that bisects the tape press and that bisects the bicycle wheel rim, extending perpendicular to the rotational axis of the bicycle wheel rim.

The tape roll holder may be configured to center a held tape roll relative to the centerline of the applicator with a pair of symmetrical inwardly facing angled, ramped or sloped surfaces. The sloped surfaces may contact opposite outer edges of the held tape roll or opposite inner edges of the held tape roll. The sloped angle of the surfaces may be sufficiently sized to accommodate and centered differently sized tape rolls supporting different tape widths. In some implementations, sloped surfaces may be provided as part of a fixed (non-rotating) structure, such as a body, plate or the like provided as part of or connected to a housing of the applicator. In some implementations, the sloped surfaces may be provided as part of a roller that rolls against and along either outer edges or interior edges of the tape roll.

The rim guide may interact with the bicycle wheel rim to guide manual positioning and movement of the tape roll applicator along and about the rim. The rim guide may comprise a wheel having linear or rounded tapered sides that engage interior sides of the side walls forming the rim. The rim guide may comprise at least one fixed body, such as a bar, plate or other structure having a pair of opposite symmetrical linear or rounded tapered outer sides or edges that engage interior sides of the side walls forming the rim. The rim guide may comprise at least one fixed body, such as a bar, plate or other structure having a pair of opposite symmetrical linear rounded mutually facing tapered interior sides that engage outer sides of the side walls forming the rim. The rim guide may comprise at least one wheel or at least one fixed body that bears against one of the walls that form the rim. For example, the rim guide may engage, contact or bear against an exterior of a single wall of the rim, an interior of the single wall of the rim, or concurrently against both an exterior and an interior of the single wall of the rim. In the case of a fixed body, the body may slide along the exterior, the interior or both the exterior and the interior of the single wall. In the case of the at least one wheel, a single wheel may roll along or against the interior exterior of the single wall. In some implementations, the rim guide may comprise two wheels that rotate along against both an interior and an exterior of the single wall, the wall being captured between the two wheels (rollers).

The tape press may guide and press a tape line, pealed from the roll of tape, into the channel as the tape applicator is moved about the wheel rim. In some implementations, the tape press may comprise a wheel that rolls within and along the channel. In some implementations where the channel further comprises a secondary channel or groove extending from the floor of the channel (the floor forming the primary" channel), the wheel may be sized to fit within the secondary channel or groove, pressing the tape into the secondary channel or groove. In some implementations, the wheel may have a width corresponding to or less than the width of the secondary channel, facilitating use of the applicator in a different rim having differently sized primary channels. In some implementations, the wheel may have a first circumferential portion that fits within the secondary channel and second portions on opposite sides of the first circumferential portion that ride or move along the floor of the primary channel as the applicator is moved about the wheel rim. In some implementations, the tape press may comprise a prong or finger that extends into the rim channel and presses the tape into the rim channel. In some implementations, the prong or finger may have a width less than or equal to the width of the secondary channel so as to press the tape into the secondary channel and be usable with different rim having different channel widths. In some implementations, the finger or prong may have a first portion that fits within the secondary channel and second portions on opposite sides of the first portion that move within the primary channel above its floor.

### BRIEF DESCRIPTION OF THE DRAWINGS

Figure 1 is a side view schematically illustrating portions of an example bicycle tape application system.
Figure 2 is a sectional view of one example of the system of Figure 1.
Figure 3 the sectional view of one example of the system of Figure 1.
Figure 4 is a sectional view of one example of the system of Figure 1.
Figure 5 is a side view schematically illustrating portions of an example bicycle tape application system.
Figure 6 is a front perspective view of an example bicycle tape applicator.
Figure 7 is a sectional view through a centerline of the bicycle tape applicator of Figure 6.
Figure 8 is a rear perspective view of the example bicycle tape applicator of Figure 6.
Figure 9 is a sectional view schematically illustrating portions of an example tape guide or extension of the applicator of Figure 6.
Figure 10 is a front perspective view of the applicator of Figure 8.
Figure 11 is a sectional view of the applicator of Figure 8 taken along line 11-11.
Figure 12 is a right side view of the example bicycle tape applicator of Figure 6 during application of tape to a bicycle rim.
Figure 13 is a left side view of the example bicycle tape applicator of Figure 6 during application of tape to a bicycle rim.
Figure 14 is a sectional view of the bicycle tape applicator of Figure 12 through a centerline of the bicycle tape applicator.
Figure 15 is a front view of the bicycle tape applicator of Figure 6 during application of tape to a bicycle rim.
Figure 16 is a sectional view of the bicycle tape applicator of Figure 15.
Figure 17 is a rear view of the bicycle tape applicator of Figure 6 during application of tape to a bicycle rim.
Figure 18 is a sectional view of a rear portion of the bicycle tape applicator of Figure 17.
Figure 19 is a sectional view of the bicycle tape applicator of Figure 17 during cutting of a tape line.
Figure 20 is a front perspective view of the example bicycle tape applicator of Figure 19 during the cutting of the tape line.
Figure 21 is a bottom perspective view of the tape applicator of Figure 1 (without tape).
Figure 22 is a front perspective view of an example bicycle tape applicator (without holding tape) positioned over an example bicycle rim.
Figure 23 is a top perspective view of the bicycle tape applicator of Figure 22 (without holding tape) positioned over an example bicycle rim.
Figure 24 is a front perspective view of an example bicycle tape applicator of Figure 22 carrying tape during application of tape to the example bicycle rim.
Figure 25 is a sectional view through an example guide example bicycle tape applicator of Figure 24.
Figure 26 is a front perspective view of the example bicycle tape applicator of Figure 24.
Figure 28 is a rear perspective view of the example bicycle tape applicator of Figure 24.
Figure 29 is a front left perspective view of an example bicycle tape application system.
Figure 30 is a right perspective view of the example bicycle tape application system of Figure 29.
Figure 31 is a sectional view of the bicycle tape application system of Figure 29.
Figure 32 is a partially exploded perspective view of the bicycle tape application system of Figure 29.
Figure 33 is a partially exploded view of the bicycle tape application system of Figure 29 during the cutting of tape.
Figure 34 is a sectional view of the bicycle tape application system of Figure 33.
Figure 35 is a left front exploded perspective view of a bicycle tape applicator of the bicycle tape application system of Figure 29.
Figure 36 is a right rear exploded perspective view of a bicycle tape applicator of the bicycle tape application system of Figure 29.
Figure 37 is a side view schematically illustrating an example bicycle tape application system.
Figure 38 is a side view schematically illustrating an example an example bicycle tape application system.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION OF EXAMPLES

Disclosed are example bicycle tape applicators that may be used to apply tape to the channel of a bicycle wheel rim. The example bicycle tape applicators are portable in nature, meaning that they may be manually held and carried by a person. For example, in some implementations, each of the disclosed bicycle tape applicators have a weight and size such that an average adult is able to carry, lift and lower the applicator onto a bicycle rim and move the applicator along the bicycle rim with one hand (one arm) while in a standing or seated position. In some implementations, the bicycle rim may be rotated while the applicator is held in position with respect to the rotating bicycle rim. Such a process may involve use of a single hand or both hands.

The example bicycle tape applicators are configured to be manually held and moved about the bicycle wheel rim or manually held as a bicycle wheel rim is rotated with respect to the applicator. The example bicycle tape applicators have a weight and size that facilitate such manual use. The example bicycle tape applicators may have a weight of less than 7 pounds and, in some implementations, less than 5 pounds. The example bicycle tape applicators do not require any motors, pumps or electrical power, either from an electrical outlet or from a battery. The example bicycle tape applicators are configured to rely solely upon manually applied power and force. As a result, the example bicycle tape applicators may be used in remote locations or other locations where access to electrical power is not available or at times when a charged battery is not available.

The example bicycle tape applicators include a portable housing for being manually moved along a bicycle rim, a tape roll holder supported by the housing, a rim guide, and a tape press. In some implementations, the tape roll holder removably receives a tape roll of tape. In some implementations, the tape roll holder removably receives a cartridge containing or supporting a tape roll of tape. In some implementations, the tape roll holder permanently or non-removably holds a roll of tape.

In some implementations, the tape roll holder engages the interior circumferential surface or interior circumferential edges of a cylindrical spool supporting the tape which is wound or wrapped about the spool. In some implementations, the tape roll holder engages an outer circumferential surface of the tape roll. For example, the tape roll holder may comprise one or more cylindrical roll bars or cylinders about the tape roll and against which the tape roll rotates. In some implementations, the tape roll holder may comprise curved or rounded surface against which the tape roll holder may roll and slide.

In some implementations, the tape roll holder is configured to center the tape roll relative to a centerline of the applicator while the centerline of the applicator is also centered with respect to a centerline of the bicycle wheel rim and its channel as the bicycle tape applicator is manually moved about the bicycle wheel rim. As should be appreciated, in every instance where the bicycle tape applicator described as being manually moved about the bicycle wheel rim during the application of the tape, the bicycle tape applicator may alternatively be manually held and positioned as the bicycle wheel rim is rotated relative to the manually held bicycle tape applicator. The centerline of the applicator is located in a plane that bisects the tape press and that bisects the bicycle wheel rim, extending perpendicular to the rotational axis of the bicycle wheel rim.

In some implementations, the tape roll holder is configured to center a held tape roll relative to the centerline of the applicator with a pair of symmetrical inwardly facing angled, ramped or sloped surfaces. The sloped surfaces may contact opposite outer edges of the held tape roll or opposite inner edges of the held tape roll. The sloped angle of the surfaces may be sufficiently sized to accommodate and centered differently sized tape rolls supporting different tape widths. In some implementations, sloped surfaces are provided as part of a fixed (non-rotating) structure, such as a body, plate or the like provided as part of or connected to a housing of the applicator. In some implementations, the sloped surfaces are provided as part of a roller that rolls against and along either outer edges or interior edges of the tape roll.

The rim guide interacts with the bicycle wheel rim to guide manual positioning and movement of the tape roll applicator along and about the rim. In some implementations, the rim guide comprises a wheel having linear or rounded tapered sides that engage interior sides of the side walls forming the rim. In some implementations, the rim guide comprises at least one fixed body, such as a bar, plate or other structure having a pair of opposite symmetrical linear or rounded tapered outer sides or edges that engage interior sides of the side walls forming the rim. In some implementations, the rim guide comprises at least one fixed body, such as a bar, plate or other structure having a pair of opposite symmetrical linear rounded mutually facing tapered interior sides that engage outer sides of the side walls forming the rim. In some implementations, the rim guide may comprise at least one wheel or at least one fixed body that bears against one of the walls that form the rim. For example, the rim guide may engage, contact or bear against an exterior of a single wall of the rim, an interior of the single wall of the rim, or concurrently against both an exterior and an interior of the single wall of the rim. In the case of a fixed body, the body may slide along the exterior, the interior or both the exterior and the interior of the single wall. In the case of the at least one wheel, a single wheel may roll along or against the interior exterior of the single wall. In some implementations, the rim guide may comprise two wheels that rotate along against both an interior and an exterior of the single wall, the wall being captured between the two wheels (rollers).

The tape press guides and presses a tape line, pealed from the roll of tape, into the channel as the tape applicator is moved about the wheel rim. In some implementations, the tape press comprises a wheel that rolls within and along the channel. In some implementations where the channel further comprise a secondary channel or groove extending from the floor of the channel (the floor forming the primary" channel), the wheel may be sized to fit within the secondary channel or groove, pressing the tape into the secondary channel or groove. In some implementations, the wheel may have a width corresponding to or less than the width of the secondary channel, facilitating use of the applicator in different rim having differently sized primary channels. In some implementations, the wheel may have a first circumferential portion that fits within the secondary channel and second portions on opposite sides of the first circumferential portion that ride or move along the floor of the primary channel as the applicator is moved about the wheel rim. In some implementations, the tape press may comprise a prong or finger that extends into the rim channel and presses the tape into the rim channel. In some implementations, the prong or finger may have a width less than or equal to the width of the secondary channel so as to press the tape into the secondary channel and be usable with different rim having different channel widths. In some implementations, the finger or prong may have a first portion that fits within the secondary channel and second portions on opposite sides of the first portion that move within the primary channel above its floor.

For purposes of this disclosure, the term "coupled" shall mean the joining of two members directly or indirectly to one another. Such joining may be stationary in nature or movable in nature. Such joining may be achieved with the two members, or the two members and any additional intermediate members being integrally formed as a single unitary body with one another or with the two members or the two members and any additional intermediate member being attached to one another. Such joining may be permanent in nature or alternatively may be removable or releasable in nature. The term "operably coupled" shall mean that two members are directly or indirectly joined such that motion may be transmitted from one member to the other member directly or via intermediate members.

For purposes of this disclosure, the phrase "configured to" denotes an actual state of configuration that fundamentally ties the stated function/use to the physical characteristics of the feature proceeding the phrase "configured to".

For purposes of this disclosure, the term "releasably" or "removably" with respect to an attachment or coupling of two structures means that the two structures may be repeatedly connected and disconnected to and from one another without material damage to either of the two structures or their functioning.

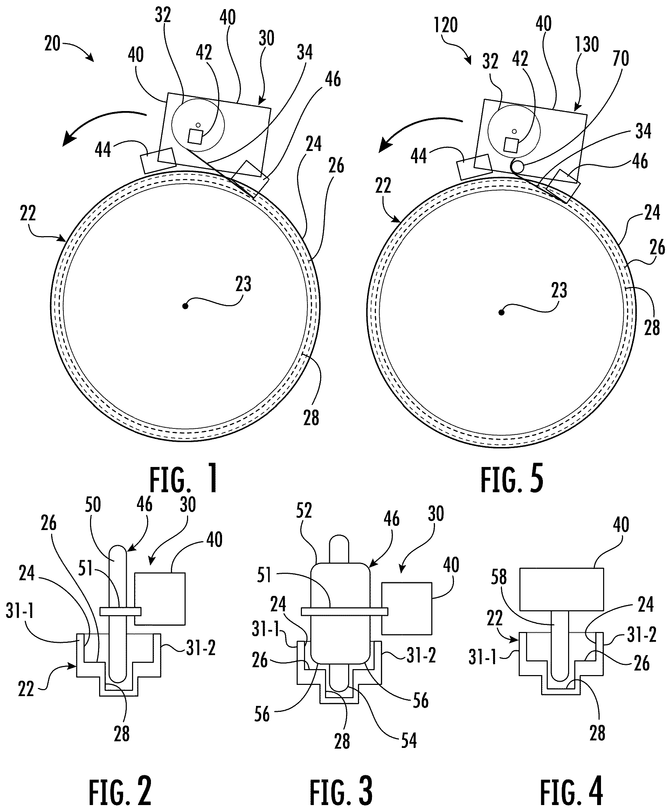

Figure 1 is a diagram schematically illustrating an example bicycle tape application system 20 during the application of tape to an example bicycle wheel rim 22. As shown by Figure 2, in the example illustrated, bicycle wheel rim 22 comprises a primary channel 24 having a floor 26. A secondary groove or channel 28 extends radially inward from the floor 26 (downward from floor 26), wherein the secondary channel 28 is generally centered between opposite side walls 31-1, 31-2 (collectively referred to as walls 31) that rise above the floor 26 and that form the primary channel 24. As should be appreciated, different rims may have different sidewall heights, different primary channel widths and depths, and different secondary channel widths and depths. In addition, the cross-sectional profile of each rim may vary. In some implementations, each of the rooms may have multiple secondary channel undulations. Likewise, the side walls 31 may have different sizes and shapes and may extend at other angles with respect to the floor 26. For example, in some implementations, the sidewalls 31 may be rounded. Likewise, the floor 26 or the floor of the secondary channel 28 may be rounded or have other shapes or profiles.

Bicycle tape application system 20 comprises bicycle tape applicator 30 supporting a bicycle tape roll 32 from which a tape line 34 is peeled and applied to an interior of the channel 24 of rim 22. Bicycle tape roll 32 may comprise tape wound in an overlapping fashion about an internal hub or spool. The width of the tape (and tape line 34) may vary from roll to roll. In some implementations, the tape line 34 has a width of 25 mm. In some implementations, the tape line 34 has a width of 40 mm. The diameter of the spool may also vary. In some implementations, the spool may have a diameter of at least 3 inches. In other implementations, the diameter of the spool may have a diameter of up to 2 inches, and nominally 1 inch.

Bicycle tape applicator 30 applies the tape to bicycle rim 22. Bicycle tape applicator 30 comprises housing 40, tape roll holder 42, a 44 and tape press 46 (all of which are schematically illustrated as generic schematic boxes or blocks). Housing 40 comprises any of various structures configured to connect and support the remaining components of applicator 30. Housing 40 may comprise one or more brackets, plates or the like which are fastened, bonded, and/or welded to one another or which are integrally formed as part of a single unitary body with one another. As will be illustrated hereafter, housing 40 may have particular portions that serve as a handle, being shaped for being manually grasped by a user's hand to position and press the applicator 30 against and along rim 22.

Tape roll holder 42 rotatably supports a held tape roll 32 as tape line 34 is peeled from roll 32. Tape roll holder 42 may center the held tape roll 32 with respect to the centerline of applicator 30 and the centerline of rim 22 (or a plane that bisects the transverse width of rim 22 and that is perpendicular to the rotational axis 23 of rim 22). In some implementations, the tape roll holder 42 is configured to center a held tape roll relative to the centerline of the applicator 30 with a pair of symmetrical inwardly facing angled, ramped, tapered or sloped surfaces. The sloped surfaces may contact opposite outer edges of the held tape roll or opposite inner edges of the held tape roll. The sloped angle of the surfaces may be sufficiently sized to accommodate and centered differently sized tape rolls supporting different tape widths. In some implementations, sloped surfaces are provided as part of a fixed (non-rotating) structure, such as a body, plate or the like provided as part of or connected to a housing 40 of the applicator 30. In some implementations, the sloped surfaces are provided as part of a roller that rolls against and along either outer edges or interior edges of the tape roll 32.

Rim guide 44 interacts with the bicycle wheel rim 22 to guide manual positioning and movement of the tape roll applicator 30 along and about the rim 22. In some implementations, the rim guide 44 comprises a wheel having linear or rounded tapered sides that engage interior sides of the side walls forming the rim. In some implementations, the rim guide 44 comprises at least one fixed body, such as a bar, plate or other structure having a pair of opposite symmetrical linear or rounded tapered outer sides or edges that engage interior sides of the side walls 31 forming the rim. In some implementations, the rim guide 44 comprises at least one fixed body, such as a bar, plate or other structure having a pair of opposite symmetrical linear rounded mutually facing tapered interior sides that engage outer sides of the side walls 31 forming the rim 22. In some implementations, the rim guide 44 may comprise at least one wheel or at least one fixed body that bears against one of the walls 31 that form the rim 22. For example, the rim guide 44 may engage, contact or bear against an exterior of a single wall (31-1 or 31-2) of the rim, an interior of the single wall of the rim, or concurrently against both an exterior and an interior of the single wall of the rim. In the case of a fixed body, the body may slide along the exterior, the interior or both the exterior and the interior of the single wall. In the case of the at least one wheel, a single wheel may roll along or against the interior or exterior of the single wall (31-1 or 31-2). In some implementations, a pair of opposing or offset wheels may rotate along against both an interior and an exterior of the single wall (31-1 or 31-2), the wall being captured between the two wheels (rollers).

Tape press 46, sometimes referred to as a tape applicator or rear tape applicator, guides and presses the tape line 34, pealed from the roll of tape 32, into the channel 24 as the tape applicator 30 is moved about the wheel rim 22 (or as a wheel rim is rotated against a manually held applicator 30). As shown by Figure 2, in some implementations, the tape press 46 comprises a wheel 50 that is rotatably supported by housing 40 for rotation about an axle 51, wherein wheel 50 rolls within and along channel 24 as well as within and along the secondary channel 28. Wheel 50 is sized to fit within the secondary channel or groove, pressing the tape into the secondary channel 28. Wheel 50 has a width corresponding to or less than the width of the secondary channel 28, facilitating use of the applicator 30 in different rim having differently sized primary channels.

As shown by Figure 3, in some implementations, the tape press 46 may comprise a wheel 52 that is rotatably supported by housing 40 about an axle 51, wherein wheel 52 has a first circumferential portion 54 that fits within the secondary channel 28 and second portions 56 on opposite sides of the first circumferential portion 54 that ride or move along the floor 26 of the primary channel 24 as the applicator 30 as applicator 30 is moved about the wheel rim 22.

As shown by Figure 4, in some implementations, the tape press 46 may comprise a prong or finger 58 that extends into the rim channel 24 or 28 and presses the tape into the rim channel 24 or 28. In some implementations, the prong or finger 58 may have a width less than or equal to the width of the secondary channel 28 so as to press the tape line 34 into the secondary channel 28 and be usable with different rims having different channel widths. In some implementations, the prong or finger 58 may have a first portion that fits within the secondary channel 28 and second wider portions on opposite sides of the first portion that move within the primary channel 24 above its floor 26. In some implementations, finger 58 comprise a rigid inflexible bar or prong. In other implementations, finger 58 may be resiliently flexible, being able to slightly bend (like a leaf spring) as it presses the underlying tape line 34 against the floor of channel 28 and as applicator 30 is manually pushed along and about rim 22 (or as rim 22 is manually rotated while against a manually held applicator 30).

Figure 5 is a side view schematically illustrating portions of an example tape application system 120. Tape application system 120 is similar to tape application system 20 except that system 120 comprises the tape applicator 130 in place of applicator 30. Tape applicator 130 is similar to tape applicator 30 except that tape applicator 130 additionally comprises tape tensioner 170. Those remaining components of tape applicator 130 which correspond to components of tape applicator 30 are numbered similarly.

Tape tensioner 170 (sometimes referred to as a tape bar) is supported by housing 40 and is configured to peel away a held tape line 34 from a tape roll 32 held by the tape roll holder 42. Tape tensioner 170 is configured to place the tape line 34 in tension as a line 34 of the tape extends from across the tape tensioner 170 to the tape press 46. Because tape line 34 is in tension as it is applied by tape press 46 to rim 22, the tape line 34 spreads out, flattens against and may be adhered to floor 26 and into channel 28 with fewer air gaps or bubbles. Reduction in air gaps or bubbles may provide an enhanced and more reliable pneumatic seal when the tubeless tire is seated to rim 22. In the example illustrated, tape tensioner 170 contacts a non-sticky surface or face of the tape and of the tape line 34, wherein the tape is reversed from the tape roll 32 to form tape line 34.

As will be described hereafter, it is been found that supporting the tape line 34 at a particular angle may achieve a level of tension that (a) provides sufficient flattening and spreading of the tape within channel 24 to reduce air gaps or bubbles and (b) does not create an undue burden or degree of resistance against manual movement of applicator 30 along and about rim 22 (or manual rotation of rim 22 relative to applicator 30), reducing fatigue on the user of applicator 30. In some implementations, the tape tensioner 170 and the tape press 46 are relatively positioned to support the tape line 34 at an angle of at least 85° and no greater than 95° with respect to a line intersecting the rotational axis 23 of the rim and those portions are surfaces of tape press 46 (surfaces of wheel 250, wheel 52 or finger 58) that are in contact with the floor of channel 28.

In some implementations, the tape tensioner 170 comprises a fixed tape bar supported by the housing. In some implementations, the tape tensioner 170 comprises a roller rotatably supported by the housing. In some implementations, the tape tensioner 170 may have other configurations.

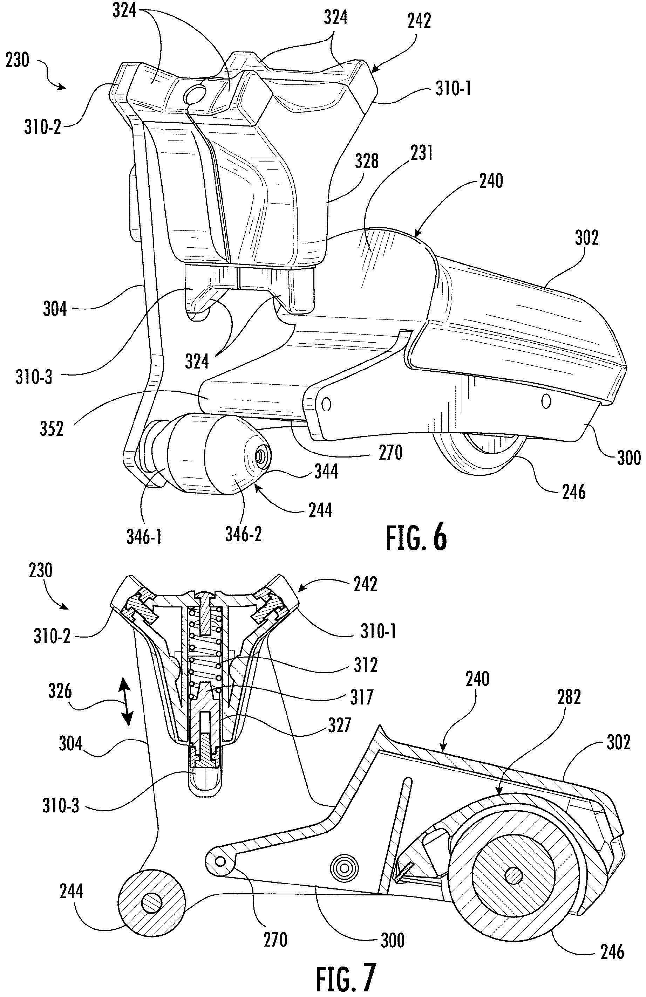

Figures 6 and 7 illustrate an example bicycle tape applicator 230 without a held tape roll, such a tape roll 32. Figure 7 is a sectional view of applicator 230 shown in Figure 6 taken along centerline 231 of applicator 230. Applicator 230 comprises housing 240, tape roll holder 242, rim guide 244, tape press 246, tape tensioner 270, and tape cutter 282. Housing 240 comprises any of various structures configured to connect and support the remaining components of applicator 230. Housing 240 may comprise one or more brackets, plates or the like which are fastened, bonded, and/or welded to one another or which are integrally formed as part of a single unitary body with one another.

As shown by Figure 6, housing 240 comprises frame 300, handle 302 and post 304. Frame 300 rotatably supports tape press 246 at a rear end of applicator 230 and supports tape tensioner 270 at its front end. Handle 302 comprise a semi-cylindrical surface extending from above tape press 246 towards post 304. Handle 302 provides a smooth surface for being received by the palm of the person's hand, facilitating carrying and positioning of applicator 230. Because handle 302 extends over and above tape press 246, handle 302 facilitates forward movement or pushing of applicator 230 about a rim, such as rim 22, and further facilitates downward pressing of tape press 246 towards the underlying rim 22 to press a tape line into the channel 24 and into channel 28 of rim 22 (shown in Figures 1 and 2). In other implementations, handle 302 may have other shapes and locations.

Post 304 extends upright from frame 300 and supports tape roll holder 242. Post 304 further rotatably supports rim guide 244. Because post 304 supports tape roll holder 242 in a cantilevered manner, post 304 facilitates sideways mounting of a held onto tape roll holder 242. Although illustrated as a plate fastened to frame 300, in other implementations, post 304 may have other shapes and configurations and may be supported in other manners. In some implementations, post 304 may comprise a yoke or a pair of posts that may support both ends of tape roll holder 242.

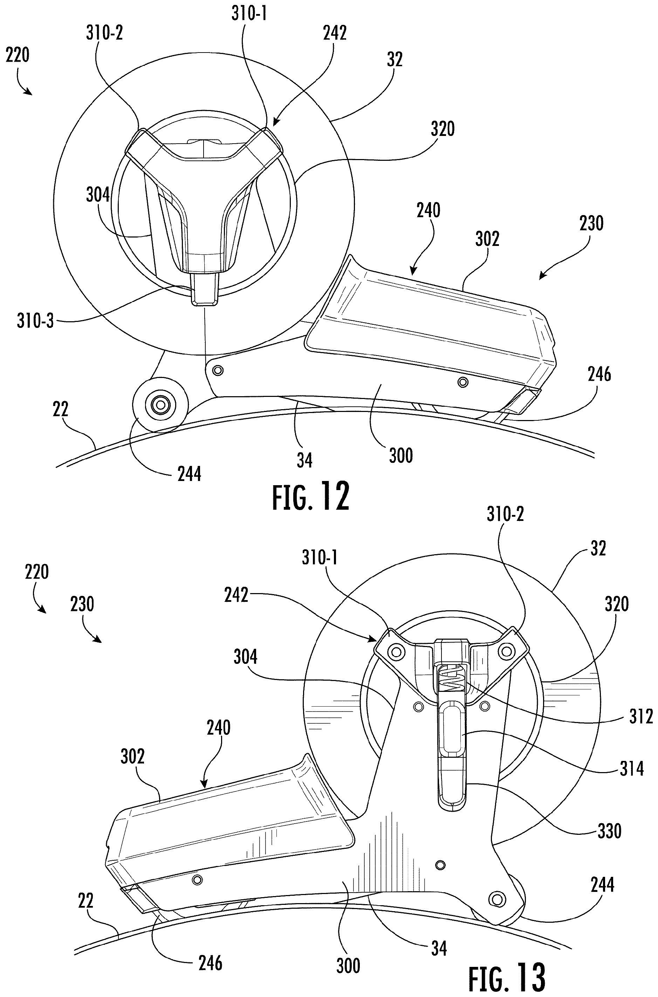

Tape roll holder 242 supports a held tape roll, such as tape roll 32. Tape roll holder 242 is configured to rotatably supports a held tape roll 32 as tape line 34 is peeled from roll 32. In the example illustrated, tape roll holder 242 contacts an inner circumferential surface or face of an internal spool 320 (shown in Figure 12) of a tape roll 32 at a plurality of points of contact so as to permit the spool 320 (along with the outer wound tape) to rotate relative to and about the points of contact. In the example illustrated, tape roll holder 342 comprises a hub 308 from which three spool guide extensions 310-1, 310-2, 310-3 (collectively referred to as extensions 310) project. Tape roll holder 242 further comprises extension bias 312, lower retraction bar 314 and upper retraction bar 316.

Each of spool guide extensions 310 are configured to be centrally located within the hollow interior of spool 320 and to extend outwardly into engagement with an interior face of the spool 320 (shown in Figure 12). Each of extensions 310 cooperate with one another to center spool 320 of the held tape roll 32 with respect to the centerline 231 of applicator 230 and the centerline of rim 22 (or a plane that bisects the transverse width of rim 22 and that is perpendicular to the rotational axis 23 of rim 22). Although tape roll holder 242 is illustrated as having three angularly spaced extensions 310, in other implementations, tape roll holder 242 may include a pair of opposite extensions or more than three extensions. In some implementations, rather than three spaced extensions, tape roll holder 242 may comprise circular or arcuate channels having the aforementioned opposite symmetrical sloped surfaces, wherein the channels receive and contact a greater inner circumferential portion of spool 320 than extensions 310. For example extensions 310-1 and 310-2 may be merged or combined into a single extension that has an arcuate channel that continuously extends across the circumferential interior surface of spool 320 between the currently illustrated positions of extensions 310-1 and 310-2.

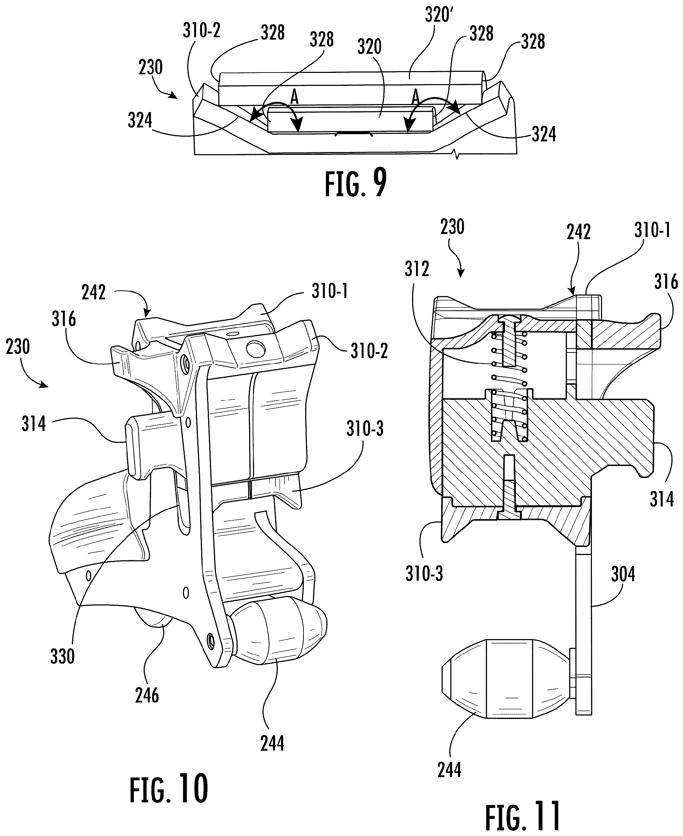

In the example illustrated, each of extensions 310 of the tape roll holder 242 are configured to center a held tape roll relative to the centerline 231 of the applicator 230 with a pair of symmetrical inwardly facing angled, ramped or sloped surfaces 324. As schematically demonstrated by Figure 9, the sloped surfaces 324 may contact opposite interior edges 328 of the spool 320, 320'. The sloped angle of the surfaces may be sufficiently sized to accommodate and centered differently sized tape rolls with differently sized spools supporting different tape widths. In the example illustrated, the tapered or sloped surfaces 324 accommodate a first spool 320 having or supporting a tape having a first width less than 2 inches and nominally 1 inch, or a second spool 320'having or supporting a second width of at least 3 inches. In some implementations, the angles A of the sloped surfaces 324 (shown in Figure 9) may vary amongst the different extensions 3102 to facilitate enhanced contact with different sized spools and differently sized tape rolls.

In the example illustrated, tape roll holder 242 is further configured to facilitate manual mounting of a new tape roll or a tape roll having a different tape width, and removal of a tape roll (such for replacing an exhausted spool or changing tape size) without the use of tools. As shown by Figures 7, 8, and 11, extensions 310-1 and 31-2 are fixed relative to post 304. In contrast, extension 310-3 is vertically movable in the direction indicated by arrows 326 (shown in Figure 7). As shown by Figure 7, extension 310-3 is slidably received within a cavity 327 formed within an outer body 328. Extension 310-3 is slidable between a lower extended state (shown in Figures 7 and 12 in which extension 310 extends about an interior circumferential edge of spool 320) and a retracted position withdrawn from the interior circumferential edge of spool 320 to facilitate separation and removal of the spool 320 from the tape roll holder 242.

Extension bias 312 comprise a compression spring within cavity 327, captured between an upper end of extensions 310-3 and a closed end of interior 327. Extension bias 312 resiliently biases extension 310-3 towards the lower extended state. In other implementations, other bias mechanisms, such as other forms of springs) may be utilized to resiliently bias extension 310-3 towards the extended state.

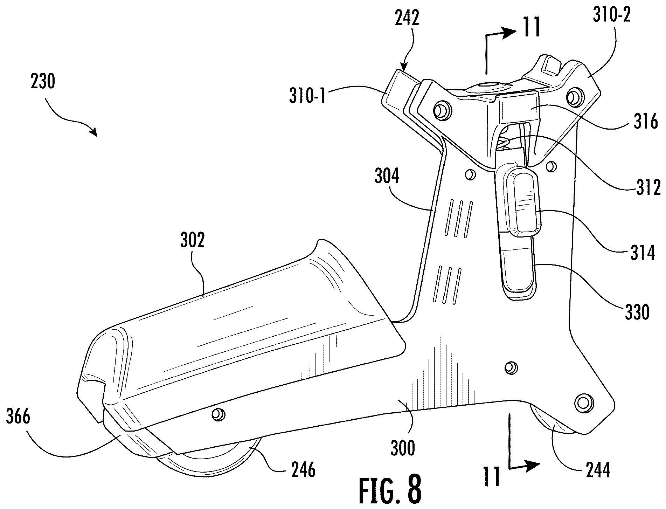

Lower retraction bar 314 (shown in Figure 8, 10 and 11) comprises a bar fixed to extension 310-3 and extending through a side slot 330 formed in post 304. Lower retraction bar 314 provides a member by which a person may manually raise or retract extension 310-3, against the force of extension bias 312, to withdraw a tape roll from tape roll holder 242. In the example illustrated, comprises an upwardly projecting post 317 that projects into a lower end of cavity 327 and into the interior of the compression spring serving as the extension bias 312 to assist in retaining and aligning a lower end of the compression spring serving as extension bias 312 within cavity 327.

Upper retraction bar 316 comprise a bar coupled to housing 240, fixed to post 304 generally opposite retraction bar 314. Upper retraction bar 316 provides a surface by which a person's fingers may grasp as the lower retraction bar 314 is raised or lifted against the force of extension bias 312, effectively squeezing bar 314 towards bar 316. In other implementations, upper retraction bar 316 may be omitted. In other implementations, extensions 310-1 and/or 310-2 may alternatively be retractable in a manner similar to that described above with respect to extension 310-3 to facilitate mounting of a tape roll or dismounting of a tape roll. In still other implementations, tape roll holder 242 may have other configurations the mounting and dismounting of the tape roll from tape roll holder 242.

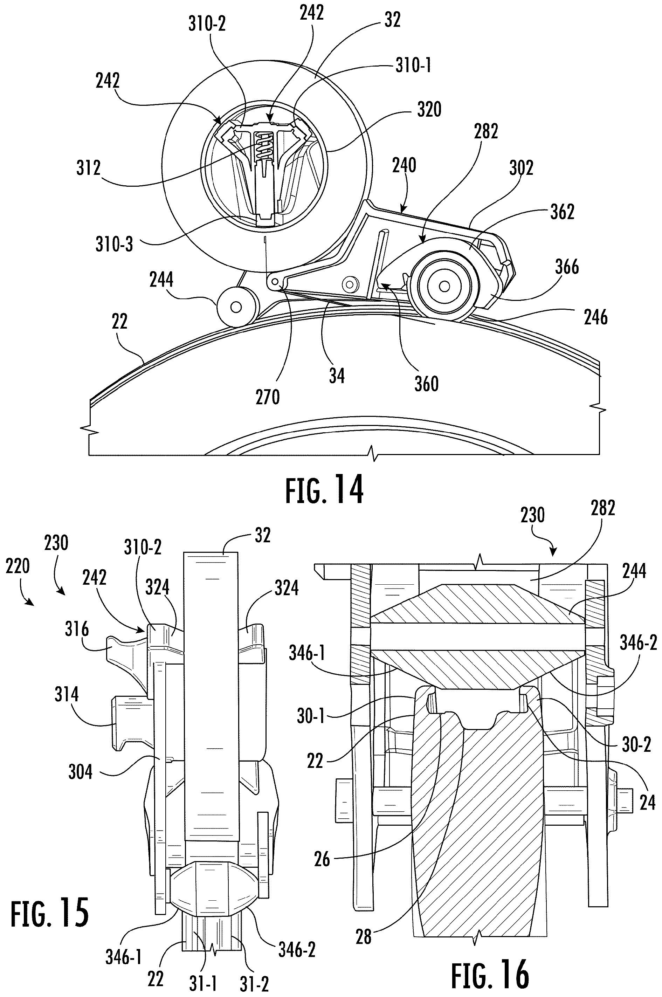

Rim guide 244 interacts with the bicycle wheel rim 22 to guide manual positioning and movement of the tape roll applicator 230 along and about the rim 22. Figures 12-16 illustrate the example interaction of rim guide 244 with rim 22. In the illustrated example, the rim guide 244 comprises a wheel 344 having linear or rounded tapered sides 346-1, 346-2. As shown by Figures 15 and 16, the sides 346 engage interior sides or edges of sidewalls 31-1, 31-2, respectively, of rim 22. The tapering sides (sloped surfaces) 346 serve to center the front of applicator 230 on rim 22. In addition, the tapering sides 346 further accommodate different widths of channel 24, facilitating use of applicator 230 with different rims 22 having different channel widths.

In other implementations, rim guide 244 may have other configurations for centering applicator 230 along the centerline of channel 24 and rim 22. For example, in some implementations, the rim guide 244 comprises at least one fixed body, such as a bar, plate or other structure having a pair of opposite symmetrical linear or rounded tapered outer sides or edges that engage interior sides of the side walls 31 forming the rim 22. In some implementations, the rim guide 244 comprises at least one fixed body, such as a bar, plate or other structure having a pair of opposite symmetrical linear rounded mutually facing tapered interior sides that engage outer sides of the side walls 31 forming the rim. In some implementations, the rim guide 244 may comprise at least one wheel or at least one fixed body that bears against one of the walls that form the rim 22. For example, the rim guide 244 may engage, contact or bear against an exterior of a single wall (31-1 or 31-2) of the rim 22, an interior of the single wall (31-1 or 31-2) of the rim 22, or concurrently against both an exterior and an interior of the single wall (31-1 or 31-2 of the rim 22 (31-1 or 31-2). In the case of a fixed body, the body may slide along the exterior, the interior or both the exterior and the interior of the single wall. In the case of the at least one wheel, a single wheel (rotating about a vertical or upwardly angled axis) may roll along or against the interior exterior of the single wall or wheels (rotating about vertical or upwardly angled axes) may rotate along and against both an interior and an exterior of the single wall (31-1 or 31-2), the wall being captured between the two wheels (rollers).

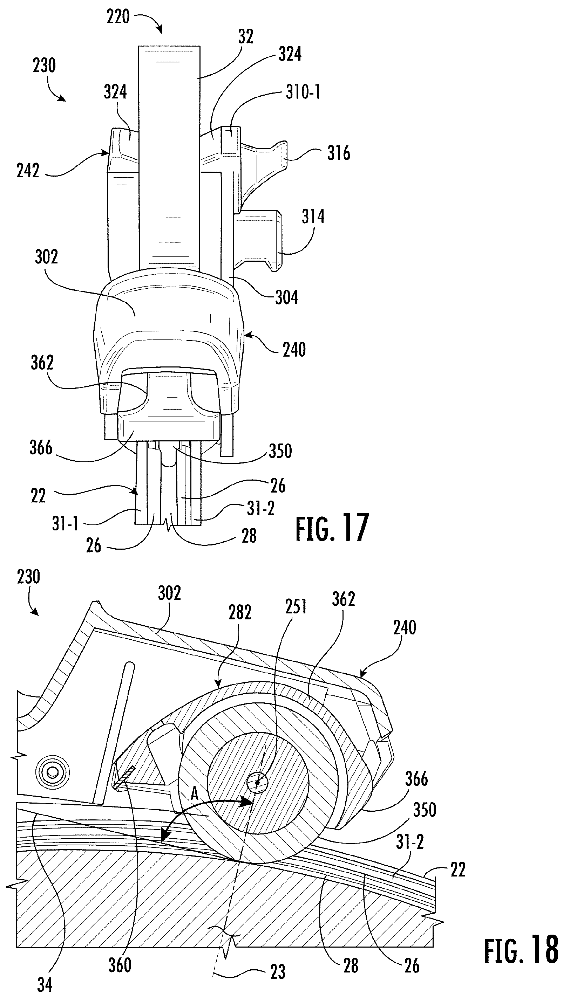

Tape press 246, sometimes also referred to as a tape applicator or rear tape applicator, guides and presses the tape line 34, pealed from the roll of tape 32, into the channel 24 as the tape applicator 230 is moved about the wheel rim 222 (or as a wheel rim is rotated against a manually held applicator 230). As shown by Figures 17 and 18, in some implementations, the tape press 246 comprises a wheel 350 that is rotatably supported by housing 240 for rotation about an axis 251, wherein wheel 350 rolls within and along channel 24 as well as within and along the secondary channel 28. Wheel 350 is sized to fit within the secondary channel 28, pressing the tape into the secondary channel 28. Wheel 350 has a width corresponding to or less than the width of the secondary channel 28, facilitating use of the applicator 230 in different rim having differently sized primary channels.

In other implementations, tape press 246 may have other configurations. For example, similar to the tape press shown in Figure 3, the tape press 246 may comprise a wheel 52 that is rotatably supported by housing 40 about an axle 51, wherein wheel 52 has a first circumferential portion 54 that fits within the secondary channel 28 and second portions 56 on opposite sides of the first circumferential portion 54 that ride or move along the floor 26 of the primary channel 24 as the applicator 230 is moved about the wheel rim 22. In yet other implementations, similar to the tape press shown in Figure 4, the tape press 246 may comprise a prong or finger 58 that extends into the rim channel 24 or 28 and presses the tape into the rim channel 24 or 28. In some implementations, the prong or finger 58 may have a width less than or equal to the width of the secondary channel 28 so as to press the tape line 34 into the secondary channel 28 and be usable with different rims having different channel widths. In some implementations, the prong or finger 58 may have a first portion that fits within the secondary channel 28 and second wider portions on opposite sides of the first portion that move within the primary channel 24 above its floor 26. In some implementations, finger 58 comprise a rigid inflexible bar or prong. In other implementations, finger 58 may be resiliently flexible, being able to slightly bend (like a leaf spring) as it presses the underlying tape line 34 against the floor of channel 28 and as applicator 230 is manually pushed along and about rim 22 (or as rim 22 is manually rotated while against a manually held applicator 30).

As shown by Figures 6, 14 and 20, tape tensioner 270 is supported by housing 240 and is configured to peel away a held tape line 34 from a tape roll 32 held by the tape roll holder 242. Tape tensioner 270 is configured to place the tape line 34 in tension as a line 34 of the tape extends from across the tape tensioner 270 to the tape press 246. Because tape line 34 is in tension as it is applied by tape press 246 to rim 22, the tape line 34 spreads out, flattens against and may be adhered to floor 26 and into channel 28 with fewer air gaps or bubbles. Reduction in air gaps or bubbles may provide an enhanced and more reliable pneumatic seal when the tubeless tire is seated to rim 22. In the example illustrated, tape tensioner 270 contacts a non-sticky surface or face of the tape and of the tape line 34, wherein the tape is reversed from the tape roll 32 to form tape line 34.

It has been found that supporting the tape line 34 at a particular angle may achieve a level of tension that (a) provide sufficient flattening and spreading of the tape within channel 24 to reduce air gaps or bubbles and (b) does not create an undue burden or degree of resistance against manual movement of applicator 30 along and about rim 22 (or manual rotation of rim 22 relative to applicator 30), reducing fatigue on the user of applicator 30. In the illustrated example, the tape tensioner 270 and the tape press 246 are relatively positioned to support the tape line 34 at an angle A of at least 85° and no greater than 95° with respect to a line intersecting the rotational axis 23 of the rim and those portions are surfaces of tape press 246 (surfaces of wheel 350, wheel 52 or finger 58) that are in contact with the floor of channel 28.

In the illustrated example, the tape tensioner 270 comprises a fixed tape bar 352 supported by the housing 240. In other implementations, the tape tensioner 270 comprises a roller rotatably supported by the housing 240. In some implementations, the tape tensioner 270 may have other configurations.

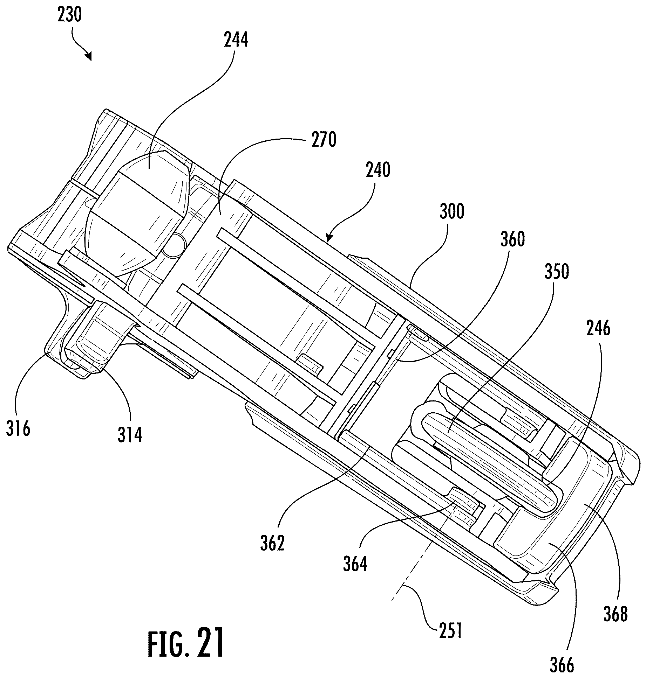

Tape cutter 282 comprises a cutting device carried by housing 240 and configured to cut tape line 34 extending between tape tensioner 70 and tape press 246. As shown by Figures 18-21, in the illustrated example, tape cutter 282 comprises tape cutting edge 360, a cutter support 362, a retractor 364 (schematically illustrated in Figure 21), and an extender 366. Tape cutting edge 360 comprises an edge or surface sufficiently sharp so as to sever tape line 34. In one implementation, tape cutting edge 360 comprises a blade having teeth. For example, one implementation, tape cutting edge 360 comprises a serrated blade having 25 teeth per inch. In one implementation, tape cutting edge 360 is provided by a metal blade. In still other implementations, tape cutting edge comprises a molded polymer cutting edge secured to or integrally formed as part of cutter support 362.

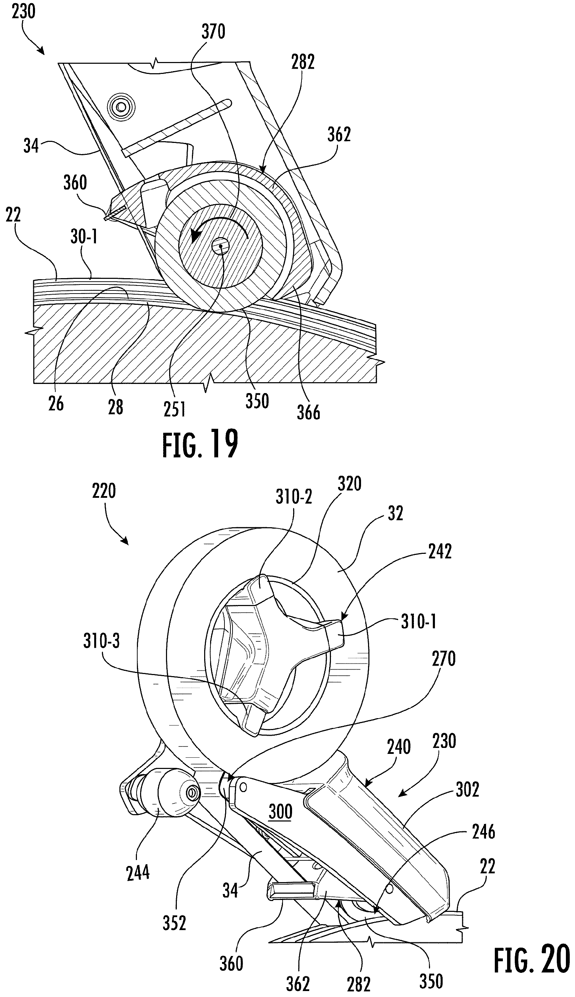

Cutter support 362 movably supports cutting edge 360 for movement between a retracted state or position as shown in Figure 18 and an extended position as shown in Figures 19 and 20. In the example illustrated, cutter support 362 rotates or pivots between the retracted position and the extended position. In the example illustrated, cutter support 362 rotates about axis 251, the same axis about which wheel 350 rotates. In other implementations, cutter support 3C2 may rotate about a different axis. In still other implementations, cutter support 362 may alternatively slide or otherwise linearly carry cutting edge 360 between the extended position and the retracted position.

Retractor 364 (schematically shown in Figure 21) comprises a mechanism to move cutting edge 360 to the retracted position. In the illustrated example, retractor 364 resiliently biases cutting edge 360 to the retracted position. In the example illustrated, retractor 364 comprise a spring. In the illustrated example, retractor 364 comprise a torsion spring having a first end secured to housing 240 and a second end secured to support 362, about axis 251. In other implementations, retractor 364 may alternatively comprise a lever or other interface projecting from housing 240 by which a user may manually move cutting edge 360 to the retracted position. In such implementations, applicator 230 may additionally comprise resiliently flexible or rubber-like tabs or other projections extending inwardly from one or both sides of housing 240 below support 362 to releasably retain support 362 and cutting edge 360 in the retracted position, wherein a sufficient downward force may overcome the tabs to move the cutting edge 360 to the extended cutting position.

Extender 366 comprises a mechanism configured to actuate or move cutting edge 360 from the retracted position shown in Figure 18 to the extended position shown in Figures 19 and 20. In the example illustrated, extender 366 comprises a bumper 368 secured to or provided as part of support 362 on a front end of applicator 230, on an opposite side of axis 251 as cutting edge 360, the cutting edge 360 being located between axis 251 and tape tensioner 270. Figures 19 and 20 illustrate the actuation or movement of cutting edge 360 to the extended tape cutting position. In particular, Figures 19 and 20 illustrate the front of applicator 230 being lifted while wheel 250 is maintained in contact with rim 22. During such lifting, applicator 230 may rotate about axis 251. Such rotation or tilting of applicator 230 may continue until extender 366 (the bumper) is brought into contact with rim 22 as shown in Figures 19 and 20. At such point in time, continued rotation of applicator 230 rotates and cutting edge 360 and the direction indicated by arrow 370. Such rotation may continue until cutting edge 360 is extended below or beyond the bottom of housing 240 and has been driven through tape line 34, cutting tape line 34. As a result, applicator 230 facilitates cutting or severing of the tape with a one-handed fluid process. In other implementations, tape cutter may have other configurations. For example, tape cutter 282 may comprise a blade provided on a rear end of housing 240. In some implementations tape cutter 282 may be omitted such as where the tape is manually cut with a separate tool or is manually torn.

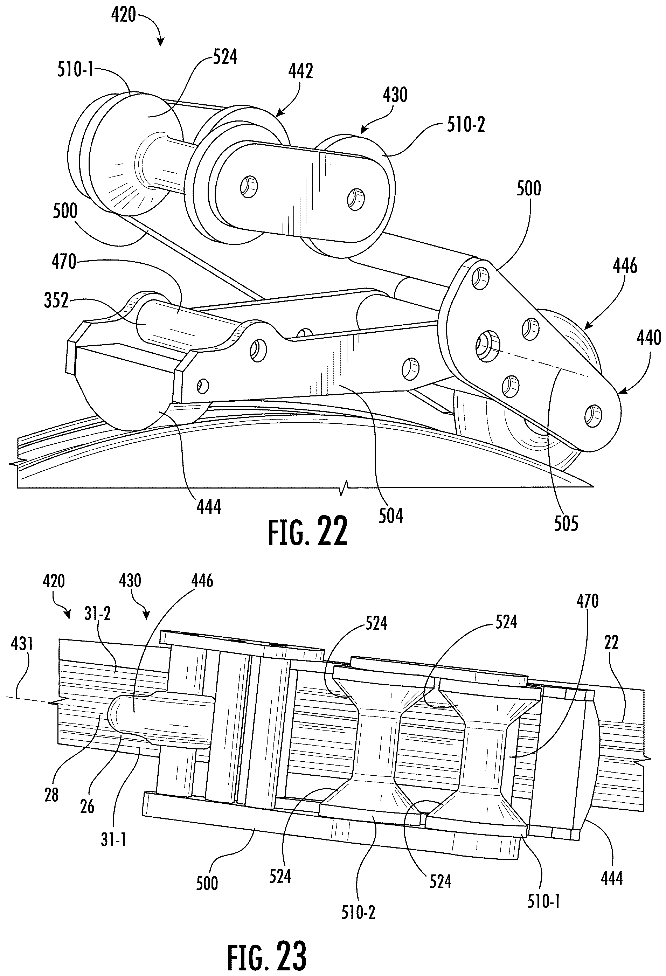

Figures 22 and 23 illustrate portions of an example bicycle tape application system 420 comprising a bicycle tape applicator 430. Applicator 230 comprises housing 440, tape roll holder 442, rim guide 444, tape press 446, and tape tensioner 470. Housing 440 comprises any of various structures configured to connect and support the remaining components of applicator 430. Housing 440 may comprise one or more brackets, plates or the like which are fastened, bonded, and/or welded to one another or which are integrally formed as part of a single unitary body with one another.

As shown by Figure 22, housing 240 comprises frame 500, handle 502 (shown in Figure 6) and claw 504. Frame 500 rotatably supports tape press 446 at a rear end of applicator 430 and supports portions tape roll holder 442 at its front end. Handle 502 (shown in Figure 6) may comprise a semi cylindrical cover piece secured to frame 500 over and above tape press 446. Handle 502 provides a smooth surface for being received by the palm of the person's hand, facilitating carrying a positioning of applicator 430. Because handle 502 extends over and above tape press 446, handle 502 facilitates forward movement or pushing of applicator 430 about a rim, such as rim 22, and further facilitates downward pressing of tape press 446 towards the underlying rim 22 to press a tape line into the channel 24 and into channel 28 of rim 22 (shown in Figures 1 and 2). In other implementations, handle 502 may have other shapes and locations.

Claw 504 is pivotably connected to a forward end of frame 500 and supports rim guide 444 and tape tensioner 470. In the example illustrated, claw 570 is sprung in a counterclockwise (as seen in Figure 22) about axis 505. In one implementation, claw 570 is sprung or resiliently biased in the counterclockwise direction with a torsion spring having one end secured to frame 500 and a second end secured to claw 504. The force applied by the torsion spring or other bias clamps spool 320 of tape roll 32 between tape roll holder 442 and tape tensioner 470. Because frame 500 cantilevers tape roll holder 442, claw 570 may be opened, pivoted in a clockwise direction (as seen Figure 22) about axis 505 to facilitate withdrawal of tape roll holder 442 from the interior of spool 320, permitting the tape roll 32 to be removed and replaced.

Tape roll holder 442 supports a held tape roll, such as tape roll 32. Tape roll holder 442 is configured to rotatably support a held tape roll 32 as tape line 34 is peeled from roll 32. In the example illustrated, tape roll holder 442 contacts an inner circumferential surface or face of an internal spool 320 (shown in Figure 12) of a tape roll 32 at a plurality of points of contact so as to permit the spool 320 (along with the outer wound tape) to rotate relative to and about the points of contact. In the example illustrated, tape roll holder 442 comprises plurality of spool centering guides 510-1, 510-2 (collectively referred to as guides 510).

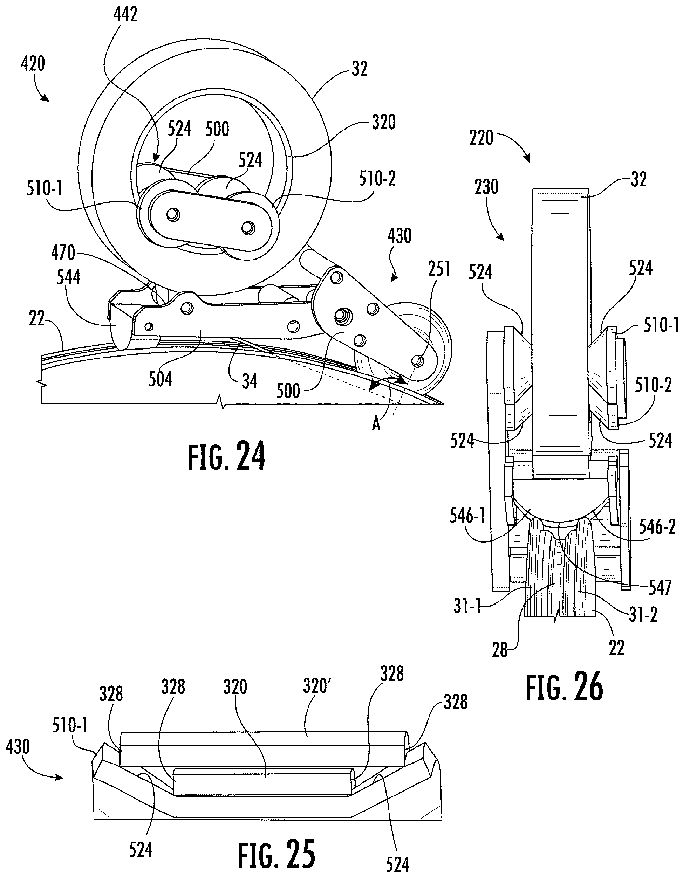

Each of spool centering guides 510 are configured to be centrally located within the hollow interior of spool 320 and to extend outwardly into engagement with an interior face of the spool 320 (as shown in Figure 24). In some implementations, each of guides 510 are fixed against rotation. In other implementations, each of guides 510 may be rotatably supported by frame 500. Each of guides 510 cooperate with one another to center spool 320 of the held tape roll 32 with respect to the centerline 431 of applicator 430 (shown in Figure 23) and the centerline of rim 22 (or a plane that bisects the transverse width of rim 22 and that is perpendicular to the rotational axis 23 of rim 22). In the example illustrated, each of guides 510 of the tape roll holder 442 are configured to center a held tape roll relative to the centerline 431 of the applicator 430 with a pair of symmetrical inwardly facing angled, ramped or sloped surfaces 524. As schematically demonstrated by Figure 25, the sloped (tapered) surfaces 524 may contact opposite interior edges 328 of the spool 320, 320'. The sloped angle of the surfaces may be sufficiently sized to accommodate and centered differently sized tape rolls with differently sized spools supporting different tape widths. In the example illustrated, the tapered or sloped surfaces 324 accommodate a first spool 320 having or supporting a tape having a first width less than 2 inches and nominally 1 inch, or a second spool 320' having or supporting a second width of at least 3 inches. In some implementations, the angles A of the sloped surfaces 324 may vary amongst the different guides 510 to facilitate enhanced contact with differently sized spools and differently sized tape rolls.

Rim guide 444 interacts with the bicycle wheel rim 22 to guide manual positioning and movement of the tape roll applicator 230 along and about the rim 22. Figures 22-25 illustrate the example interaction of rim guide 444 with rim 22. In the example illustrated, rim guide 444 comprises at least one fixed body, such as a bar, plate or other structure having a pair of opposite symmetrical linear or rounded tapered outer sides or edges that engage interior sides of the side walls 31 forming the rim 22. In the illustrated example, the rim guide 444 comprises a front guide block 544 supported at a front of frame 500 and having linear or rounded opposite tapered sides 546-1, 546-2 that extend away from a tip or point 547 on opposite sides of the tip or point 547. The tapering sides 546 serve to center the front of applicator 230 on rim 22. In addition, the tapering sides 346 further accommodate different widths of channel 24, facilitating use of applicator 430 with different rims 22 having different channel widths.

In other implementations, rim guide 244 may have other configurations for centering applicator 230 along the centerline of channel 24 and rim 22. For example, in some implementations, the rim guide 244 may comprise a wheel 344 (shown and described with respect to applicator 230) having linear or rounded tapered sides 346-1, 346-2. As shown by Figures 15 and 16, the sides 346 engage interior sides or edges of sidewalls 31-1, 31-2, respectively, of rim 22. In some implementations, the rim guide 444 comprises at least one fixed body, such as a bar, plate or other structure having a pair of opposite symmetrical linear rounded mutually facing tapered interior sides that engage outer sides of the side walls 31 forming the rim. In some implementations, the rim guide 444 may comprise at least one wheel or at least one fixed body that bears against one of the walls that form the rim 22. For example, the rim guide 444 may engage, contact or bear against an exterior of a single wall (31-1 or 31-2) of the rim 22, an interior of the single wall (31-1 or 31-2) of the rim 22, or concurrently against both an exterior and an interior of the single wall (31-1 or 31-2 of the rim 22 (31-1 or 31-2). In the case of a fixed body, the body may slide along the exterior, the interior or both the exterior and the interior of the single wall. In the case of the at least one wheel, a single wheel (rotating about a vertical or upwardly angled axis) may roll along or against the interior exterior of the single wall or wheels (rotating about vertical or upwardly angled axes) may rotate along and against both an interior and an exterior of the single wall (31-1 or 31-2), the wall being captured between the two wheels (rollers).

Tape press 446 guides and presses the tape line 34, pealed from the roll of tape 32, into the channel 24 as the tape applicator 230 is moved about the wheel rim 222 (or as a wheel rim is rotated against a manually held applicator 230). Tape press 446 is similar to tape press 246 described above in that tape press 246 comprises a wheel 350 that is rotatably supported by housing 440 for rotation about an axis 251, wherein wheel 350 rolls within and along channel 24 as well as within and along the secondary channel 28. Wheel 350 is sized to fit within the secondary channel 28, pressing the tape into the secondary channel 28. Wheel 350 has a width corresponding to or less than the width of the secondary channel 28, facilitating use of the applicator 430 in different rim having differently sized primary channels.

In other implementations, tape press 446 may have other configurations. For example, similar to the tape press shown in Figure 3, the tape press 446 may comprise a wheel 52 that is rotatably supported by housing 40 about an axle 51, wherein wheel 52 has a first circumferential portion 54 that fits within the secondary channel 28 and second portions 56 on opposite sides of the first circumferential portion 54 that ride or move along the floor 26 of the primary channel 24 as the applicator 230 is moved about the wheel rim 22. In yet other implementations, similar to the tape press shown in Figure 4, the tape press 446 may comprise a prong or finger 58 that extends into the rim channel 24 or 28 and presses the tape into the rim channel 24 or 28. In some implementations, the prong or finger 58 may have a width less than or equal to the width of the secondary channel 28 so as to press the tape line 34 into the secondary channel 28 and be usable with different rims having different channel widths. In some implementations, the prong or finger 58 may have a first portion that fits within the secondary channel 28 and second wider portions on opposite sides of the first portion that move within the primary channel 24 above its floor 26. In some implementations, finger 58 comprise a rigid inflexible bar or prong. In other implementations, finger 58 may be resiliently flexible, being able to slightly bend (like a leaf spring) as it presses the underlying tape line 34 against the floor of channel 28 and as applicator 430 is manually pushed along and about rim 22 (or as rim 22 is manually rotated while against a manually held applicator 30).

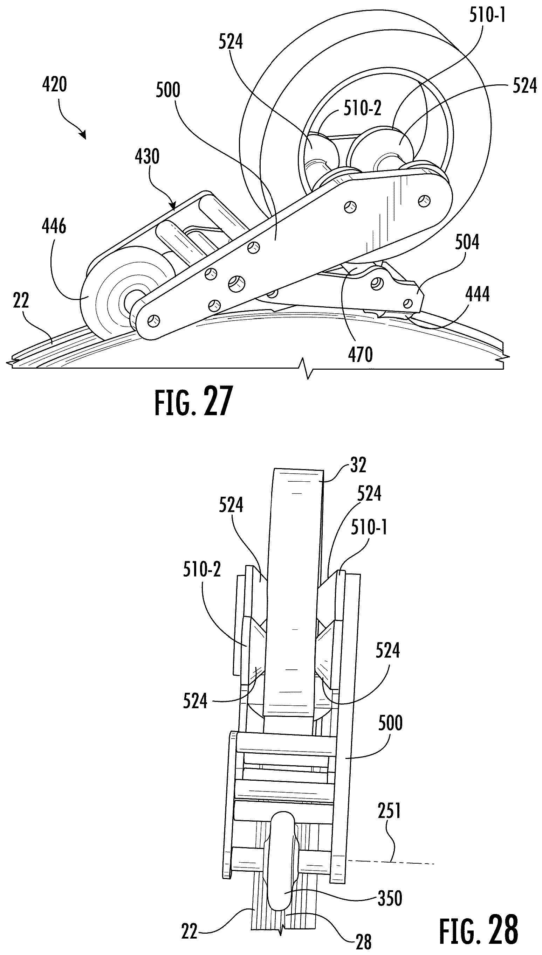

Tape tensioner 470 is similar to tape tensioner 270 described above. As shown by Figures 22-24 and 27, tape tensioner 470 is supported by housing 440 and is configured to peel away a held tape line 34 from a tape roll 32 held by the tape roll holder 442. Tape tensioner 470 is configured to place the tape line 34 in tension as a line 34 of the tape extends from across the tape tensioner 470 to the tape press 246. Because tape line 34 is in tension as it is applied by tape press 246 to rim 22, the tape line 34 spreads out, flattens against and may be adhered to floor 26 and into channel 28 with fewer air gaps or bubbles. Reduction in air gaps or bubbles may provide an enhanced and more reliable pneumatic seal when the tubeless tire is seated to rim 22. In the example illustrated, tape tensioner 470 contacts a non-sticky surface or face of the tape and of the tape line 34, wherein the tape is reversed from the tape roll 32 to form tape line 34.

As noted above, it has been found that supporting the tape line 34 at a particular angle may achieve a level of tension that (a) provide sufficient flattening and spreading of the tape within channel 24 to reduce air gaps or bubbles and (b) does not create an undue burden or degree of resistance against manual movement of applicator 430 along and about rim 22 (or manual rotation of rim 22 relative to applicator 430), reducing fatigue on the user of applicator 430. In the illustrated example, the tape tensioner 470 and the tape press 446 are relatively positioned to support the tape line 34 at an angle A of at least 85° and no greater than 95° with respect to a line intersecting the rotational axis 23 of the rim 22 and those portions or surfaces of tape press 446 (surfaces of wheel 350, wheel 52 or finger 58) that are in contact with the floor of channel 28.

In the illustrated example, the tape tensioner 470 comprises a fixed tape bar 352 supported by the housing 240. In other implementations, the tape tensioner 470 comprises a roller rotatably supported by the housing 440. In some implementations, the tape tensioner 470 may have other configurations.

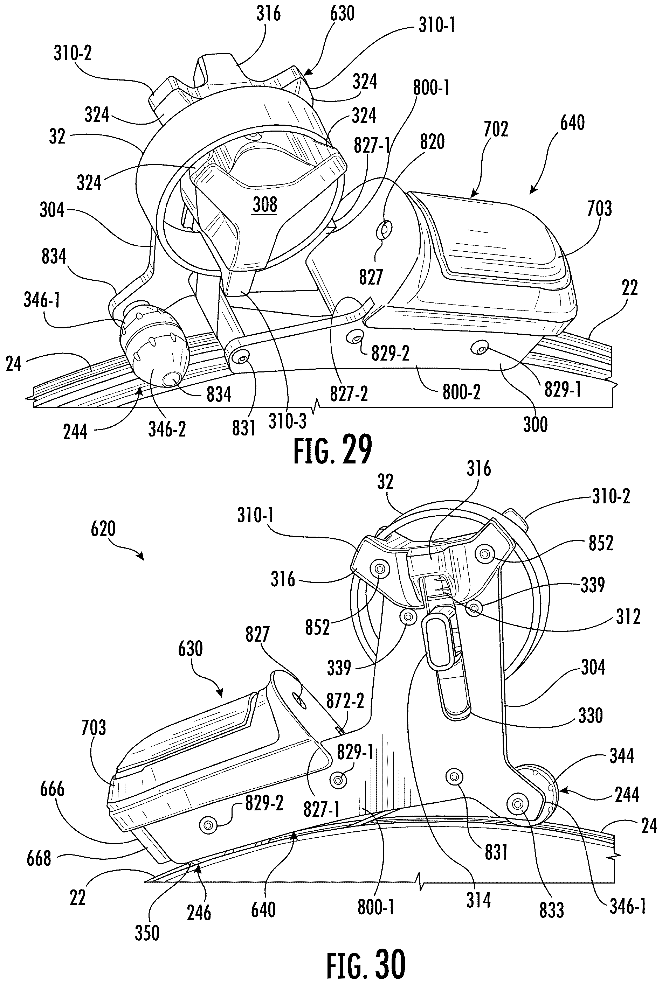

Figures 29-36 illustrate portions of an example bicycle tape application system 620 comprising a bicycle tape applicator 630. Bicycle tape applicator 630 is similar to bicycle tape applicator 230 described above except that applicator 630 comprises housing 640, tape tensioner 670 and tape cutter 682 in place of housing 240, tape tensioner 270 and tape cutter 282, respectively. Those remaining components of bicycle tape applicator 630 which correspond to components of bicycle tape applicator 230 are numbered similarly and/or are shown in the figures and described above with respect to tape applicator 230. For example, applicator 630 comprises tape roll holder 242, rim guide 244 and tape press 246 as depicted in Figures 6-21 and described above with respect to such figures. For purposes of brevity, the redundant description of such components is omitted here.

Housing 640 is similar to housing 240 described above except that housing 640 comprises handle 702 in place of handle 302 described above. Those remaining components of housing 640 which correspond to components of housing 240 are numbered similarly and/are additionally shown and described above with respect to Figures 6-21. In addition to handle 702 and as with housing 240, housing 640 comprises a frame 300 and post 304. Frame 300 comprises a pair of plates 800-1, 800-2 that extend on opposite sides of rim guide 244 and tape press 246 to support such components. Post 304 extends upwardly from the plate 800-1 of frame 300. In the example illustrated, post 304 is integrally formed as part of a single unitary body with plate 800-1 (a single plate shaped to form one half of frame 300 and post 304).

Handle 702 is similar to handle 302 of applicator 230 except that handle 702 is distinct from tape tensioner 670 and supports a different tape cutter 682. In addition, handle 702 comprises soft over grip portion 703 forming a top and upper sides of handle 702. The over grip portion 703 may be molded onto or co-molded over the underlying base structure of housing 702. In some implementations, the over grip portion 703 may be popped or snapped onto an underlying portion of housing 702 (being secured by a mechanical interlock) or may be adhesively bonded or welded to the underlying portion of housing 702. In some implementations, over grip portion 703 may comprise a soft polymer or rubber-like material. For example, in some implementations, over grip portion 703 may comprise a thermoplastic polyurethane (TPU). In some implementations, over grip portion 703 may be omitted.

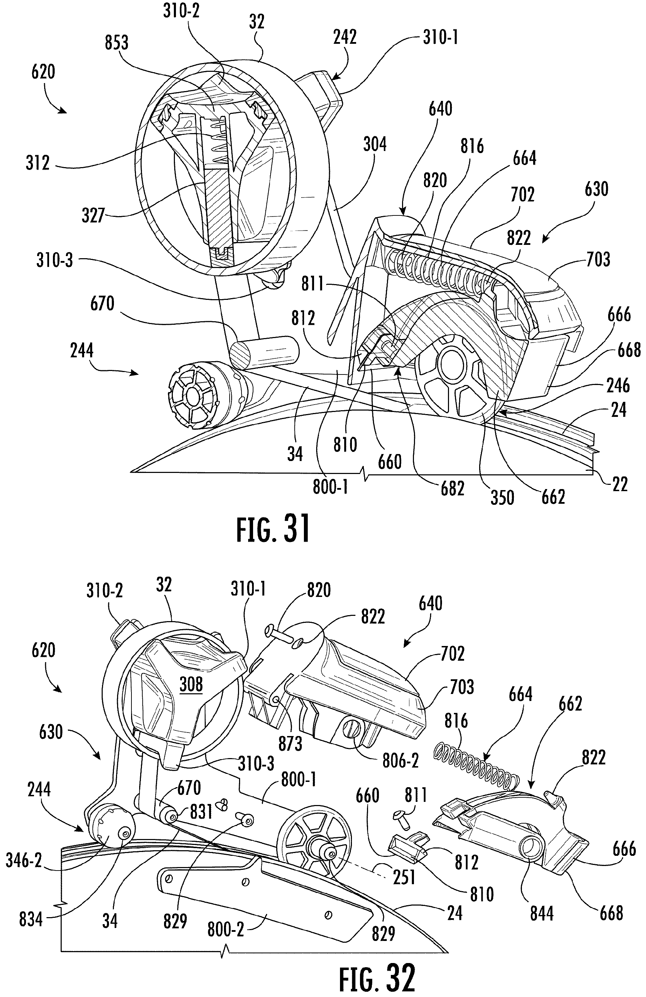

As shown by Figures 31 and 32, tape tensioner 670 comprises a tape bar in the form of a cylinder sandwiched between plates 800-1 and 800-2 forward and spaced from housing 640. Tape tensioner 670 is not part of handle 702. Tape tensioner 670 is similarly located with respect to tape press 246 and functions the same as described above with respect to tape tensioner 270. In particular, as described above with respect to tape tensioner 270, tape tensioner 670 and the tape press 246 are relatively positioned to support the tape line 34 at an angle A of at least 85° and no greater than 95° with respect to a line intersecting the rotational axis 23 of the rim and those portions are surfaces of tape press 246 (surfaces of wheel 350, wheel 52 or finger 58) that are in contact with the floor of channel 28A (the angle A once again being defined in Figure 18, but equally applicable to applicator 630). As noted above, it has been found that supporting the tape line 34 at the noted particular angle may achieve a level of tension that (a) provides sufficient flattening and spreading of the tape within channel 24 to reduce air gaps or bubbles and (b) does not create an undue burden or degree of resistance against manual movement of applicator 630 along and about rim 22 (or manual rotation of rim 22 relative to applicator 630), reducing fatigue on the user of applicator 630.

As with handle 302, handle 702 rotatably supports wheel 350 of tape press 246. To this end, handle 702 comprises a pair of opposing downwardly extending flanges 804-1, 804-2 providing a pair of aligned axle openings 806-1, 806-2 (collectively referred to as axle openings 806), respectively, which receive an axle shaft 808 providing the rotational axis 251 for wheel 350. In some implementations, wheel 350 rotates about axle shaft 808 which is fixed in place between plates one 800. In some implementations, wheel 350 is affixed to axle shaft 808, wherein axle shaft 808 rotates within axle openings 806. As with handle 302, handle 702 further rotatably supports tape cutter 682.

Tape cutter 682 comprises a cutting device carried by housing 240 and configured to cut tape line 34 extending between tape tensioner 70 and tape press 246. As shown by Figures 31 and 32, in the illustrated example, tape cutter 682 comprises tape cutting edge 660, a cutter support 662, a retractor 664 and an extender 666. Tape cutting edge 660 comprises an edge or surface sufficiently sharp so as to sever tape line 34. In one implementation, tape cutting edge 660 comprises a blade 810 having teeth. In the example illustrated, the blade 810 is supported by a blade bracket 812 which is mounted to a front-end of cutter support 662 by a fastener 811. In one implementation, blade 810 snaps or pop into bracket 812, being held by a mechanical interlock. In one implementation, bracket 812 pinches blade 810 against a front corresponding surface of cutter support 662 to hold blade 810 in place. In one implementation, tape cutting edge 660 comprises a serrated blade having 25 teeth per inch. In one implementation, tape cutting edge 660 is provided by a metal blade. In still other implementations, tape cutting edge comprises a molded polymer cutting edge secured to or integrally formed as part of cutter support 662.

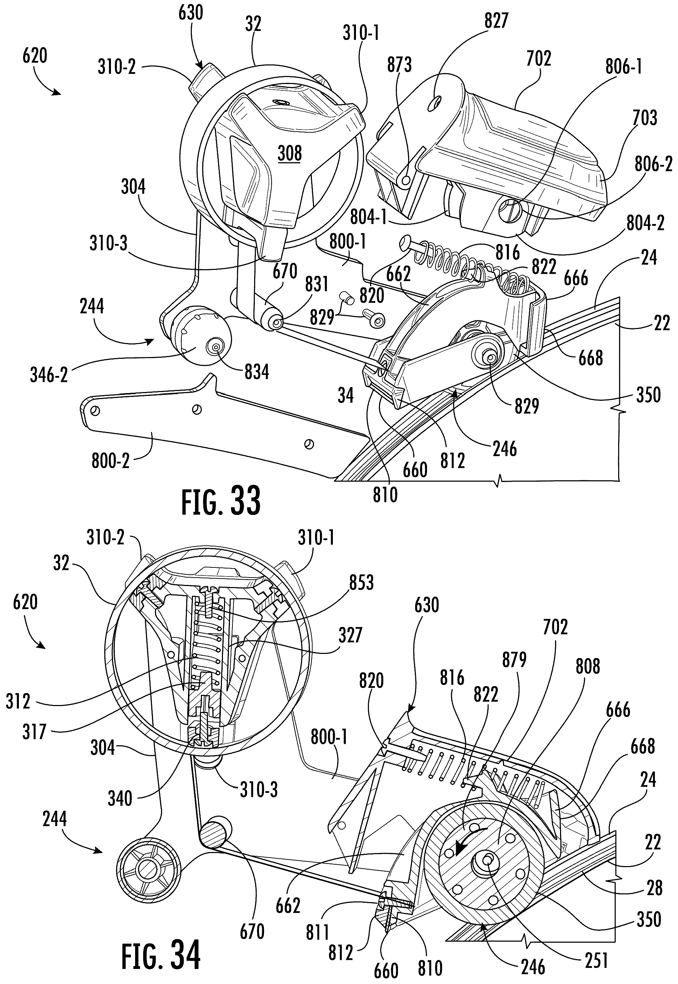

Cutter support 662 movably supports cutting edge 660 for movement between a retracted state or position as shown in Figures 31 and 32 and an extended, tape cutting position as shown in Figures 33 and 34. In the example illustrated, cutter support 662 rotates or pivots between the retracted position and the extended position. In the example illustrated, cutter support 662 rotates about axis 251, the same axis about which wheel 350 rotates. In other implementations, cutter support 662 may rotate about a different axis. In still other implementations, cutter support 662 may alternatively slide or otherwise linearly carry cutting edge 660 between the extended position and the retracted position.

Retractor 664 comprises a mechanism to move cutting edge 660 to the retracted position. In the illustrated example, retractor 664 resiliently biases cutting edge 660 to the retracted position. In the example illustrated, retractor 664 comprise a spring. In the illustrated example, retractor 364 comprise a compression spring 816 captured between housing 640 and cutter support 662. The compression spring has a first end secured to handle 702 of housing 240 and a second end secured to support 662 above the rotational axis 251.

**In** the example illustrated, the first end is retained relative to handle 702 by an inwardly projecting shaft that extends into or within the interior of the coils of compression spring 816. In the example illustrated, the shaft is provided by a fastener/bolt 820 is threaded into or through a front opening 827 in housing 640, wherein an end of the bolt 820 projects into and within the coils of spring 816 as shown in Figure 31. In other implementations, the shaft otherwise provided by the end of bolt 820 may be provided by other structures. For example, the shaft may be provided by a pin molded, bonded or otherwise secured to housing 640. The shaft may be provided by a projection or rod integrally formed as part of a single unitary body with housing 640. In some implementations, spring 816 may be retained by channel or sleeve provided by or supported by housing 640.

In the example illustrated, the second end of spring 816 is secured to cutter support 662 by a forwardly projecting post or shaft 822 which is integrally formed as part of a single unitary body with cutter support 662. Shaft 822 projects forwardly towards the shaft of bolt 820 and projects into the interior of the coils forming spring 816 such that spring 816 is captured between the end of the shaft of bolt 820 and shaft 822. In other implementations, shaft 822 may alternatively comprise a bolt screwed into and through cutter support 662 (similar to bolt 820) or a pin otherwise mounted to and projecting from cutter support 662.

In other implementations, retractor 664 may alternatively comprise a lever or other interface projecting from housing 640 by which a user may manually move cutting edge 660 to the retracted position. In such implementations, applicator 630 may additionally comprise resiliently flexible or rubber-like tabs or other projections extending inwardly from one or both sides of housing 640 below support 662 to releasably retain support 662 and cutting edge 660 in the retracted position, wherein a sufficient downward force may overcome the tabs to move the cutting edge 660 to the extended cutting position.

Extender 666 comprises a mechanism configured to actuate or move cutting edge 660 from the retracted position shown in Figure 31 to the extended position shown in Figures 33 and 34. In the example illustrated, extender 666 comprises a bumper 668 secured to or provided as part of support 6662 on a front end of applicator 630, on an opposite side of axis 251 as cutting edge 660, the cutting edge 660 being located between axis 251 and tape tensioner 670.

Figures 33 and 34 illustrate the actuation or movement of cutting edge 660 to the extended tape cutting position. In particular, Figures 33 and 34 illustrate the front of applicator 630 being lifted while wheel 250 is maintained in contact with rim 22. During such lifting, applicator 630 may rotate about axis 251. Such rotation or tilting of applicator 630 may continue until extender 666 (the bumper) is brought into contact with rim 22 as shown in Figures 33 and 34. At such point in time, continued rotation of applicator 630 rotates and cutting edge 660 and the direction indicated by arrow 879. Such rotation may continue until cutting edge 660 is extended below or beyond the bottom of housing 640 and has been driven through tape line 34, cutting tape line 34. During such time, compression spring 816 is compressed between cutter support 662 and handle 702. In the above example, applicator 630 facilitates cutting or severing of the tape with a one-handed, fluid process. In other implementations, tape cutter may have other configurations. For example, tape cutter 682 may comprise a blade provided on a rear end of housing 640. In some implementations tape cutter 682 may be omitted such as where the tape is manually cut with a separate tool or is manually torn.

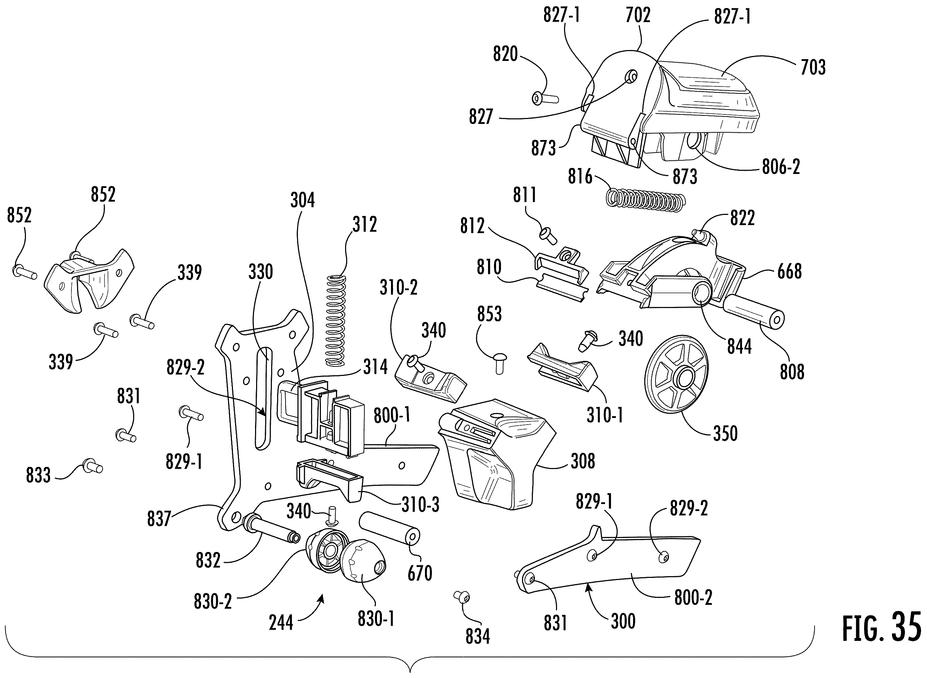

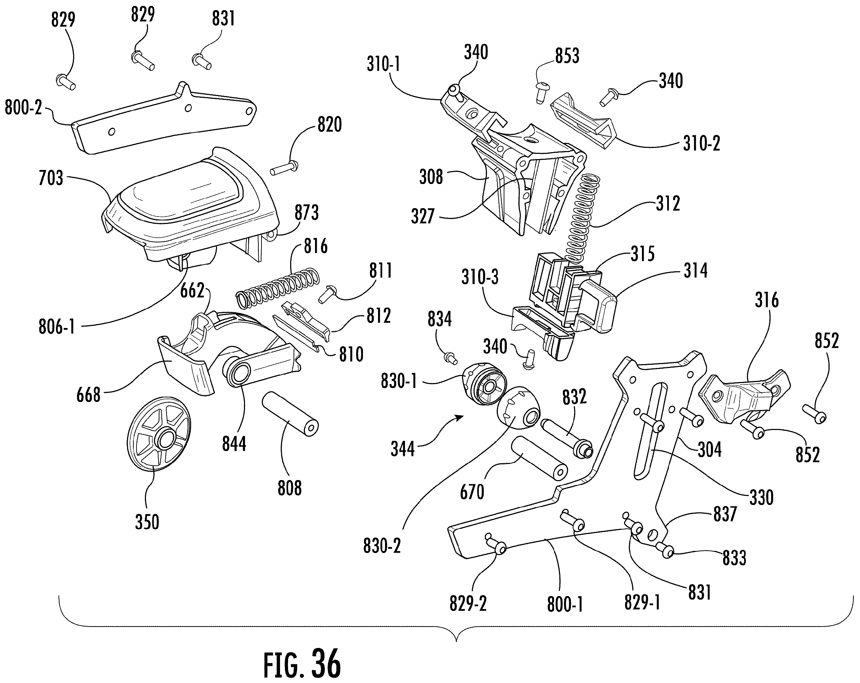

Figures 35 and 36 are exploded perspective views illustrating one example set of components that may be assembled to form applicator 630. Figure 35 is a front left side exploded perspective view of applicator 630 while Figure 36 is a rear right side exploded perspective view of applicator 630. In other implementations, applicator 630 may be formed by other combinations of components assembled together in a similar fashion or in other fashions. For example, particular individual components shown in Figure 35 and 36 may be further broken apart into multiple additional subcomponents which are secured to one another to form the individual component. In some implementations, separate individual components shown in Figure 35 and 36 may be combined as a single component. In the example illustrated, each of the fasteners comprise a screw or bolt which passes through or into corresponding openings. In lieu of the screws or bolts shown, other fasteners may be employed, or such joining may be made by welding, adhesives or mechanical interlocks or snaps. As noted above, in some implementations, particular components may be omitted.

As shown by Figure 29 as well as Figures 35 and 36, plates 800-1 and 800-2 are received within corresponding channels or grooves 827-1 and 827-2, respectively, on an underside of housing 640. Plates 800 are secured to handle 702 of housing 640 by fasteners 829-1 which pass through plates 800 on opposite sides of handle 702 and are threaded into bores 873 on a front portion of handle 702. A rear portion of handle 702 is supported relative to frame 300 by fasteners 829-2 which pass through plates 800 and which are threaded into opposite ends of axle shaft 808 which is sandwiched between plates 800. Tape tensioner 670 is sandwiched between plates 800-1 and 800-2, having its opposite ends affixed to plates 800-1 and 800-2 by fasteners 831.

As shown by Figure 35 and 36, in the example illustrated, wheel 344 of rim guide 244 is formed by two wheel halves 830-1 and 830-2 having aligned openings that receive an axle shaft 832. Axle shaft 832 is secured to plate 800-1 by a fastener 833 . The two halves 830 are held together and captured between an enlarged head of shaft 832 and the head of a fastener 834 . In the example illustrated, axle shaft 832 is affixed to and cantilevered from a forward portion 837 of plate 800-1, wherein the wheel 344 formed by halves 830 rotates about and relative to the axle shaft 832. **In** other implementations, wheel 344 may be formed as a single piece and/or may be rotatably supported in other fashions.

In some implementations, rim guide 244 may alternatively comprise rim guide 444 described hereafter with respect to applicator 430. Rim guide to 44 comprises a fixed plate, bar or the like mounted between plates 800. As shown by Figures 23 and 26, rim guide 444 may be positioned so as to project into channel 24, while engaging and sliding along interior sides of the channel 24 during movement of the applicator relative to the rim 22.

In the example illustrated, hub 308 of tape holder 242 is generally a triangular shaped member mounted to one side of plate 800-1 by fasteners 339 and fasteners 852. Extensions 310 (sometimes referred to as fingers) of tape holder 242 each comprise individual components releasably mounted to hub 308 using fasteners 340. The upper end of the extension bias 312 is retained by a lower shaft portion of a fastener 853 which passes through a top of hub 308 and projects into an upper end of cavity 327, into the interior of the compression spring serving as extension bias 312. In other implementations in lieu of post 317 and fastener 853, other mechanisms may be used to retain and align the extension bias 312 within cavity 327. For example, hub 308 may include a downwardly projecting post replacing fastener 853 and the fastener 340 of extension 310-3 may be longer, extending into the coil of the compression spring serving as extension bias 312.

Each of extensions 310 provides the pair of opposing tapered or sloped surfaces 324 that assist in centering the tape roll 32. Because extensions 310 are removably mounted to hub 308, they may be easily replaced or exchanged when worn. In some implementations, each of extensions 310 may be replaced with differently configured extensions 310 having different spacings between the surfaces 324 to accommodate different tape rolls having different widths. In other implementations, one or more of extensions 310 may alternatively be integrally formed as part of a single unitary body with hub 308.

As shown by Figures 35 and 36, upper retraction bar 316 is provided by a separate piece mounted to post 304 on opposite side of post 304 as hub 308. The piece providing upper retraction bar 316 is secured by fasteners 852. Fasteners 852 passed through upper retraction bar 316 and through post 304 into one side of hub 308 to assist in securing hub 308 to post 304. In other implementations, upper retraction bar 316 may be mounted to post 304 in other fashions or may be integrally formed as part of a single unitary body with frame 300. In some implementations, upper retraction bar 316 may be omitted.

As further shown by Figures 35 and 36, cutter support 662 comprises a pair of aligned cylindrical openings 844 configured to rotatably receive axle 808. Openings 844 are aligned with openings 806 of handle 702 such that wheel 350 may rotate about the axis of axle 808 and such that housing 640, including handle 702 and frame 300 axis 251 provided by axle 808. Openings 844 facilitate rotation of cutter support 662 about the axis of axle 808, axis 251 (shown in Figure 34).

In many of the illustrated examples, the bicycle tape applicators facilitate removal and replacement of a spool/tape roll either without tools or with tools. In some implementations, the spools/tape rolls may be contained within a cartridge, wherein the tape roll holder comprises a slot or cavity configured to receive the cartridge. Reception of the cartridge automatically aligns the tape roll with the centerline of the applicator (and that of the rim 22 during application). In some implementations, the tape tensioner may be provided as part of the cartridge, wherein the tape tensioner of the cartridge peals wound tape to a tape line which exits the cartridge for passing below the tape press. In some implementations, the spool/tape roll may be part of a tape application system wherein the spool/tape roll or not removable or separable from the housing. For example, the housing may enclose the spool/tape roll. In such implementations, the applicator, upon exhaustion of the provided tape may be discarded.

In each of the example implementations the rim guide is illustrated as being located at a front of the housing of the tape applicator is illustrated as being at the rear of the housing. The terms "front" and "rear" generally refer to the direction in which to particular tape applicator is moved along the rim 22, wherein the "front" of the applicator leads the "rear" of the applicator in the direction of travel along rim 22 during the application of tape. Although it may be beneficial to have the rim guide lead the tape applicator at the "front" of the applicator to lead the application of tape by the tape press 46, 246, 446 for enhanced alignment and placement of the tape along rim 22, in some implementations, each of the above-described applicators 30, 130, 230, 430 and 630 may be reversed in construction such that the rim guide is to align the positioning of the tape along the rim 22 trails the tape press 46, 246, 446 as the applicator 30, 130, 230, 430 and 630 is moved along rim 22 in a direction of travel. In such reversed implementations, the tape roll holder 242 would likewise trail the movement of the tape press 46, 246, 446 through movement along rim 22. In such an implementation, handle 702 may be reconfigured to facilitate gripping for movement in this reverse direction. In such an implementation, the tape line would alternatively be fed by appropriate guides of the housing such that the tape line is fed in front of the tape press 46, 246, 446, extending over axis 251 before reversing direction and passing beneath axis 251 where would be pressed into the channel of rim 22.

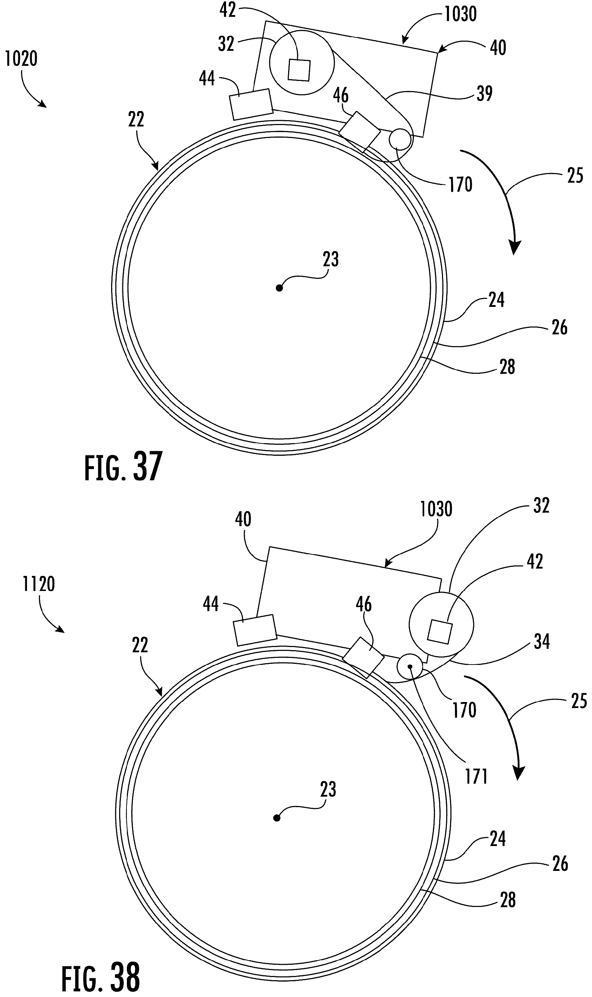

Figures 37 and 38 illustrate example tape applicators where the rim guide trails the tape press during application of tape to a bicycle rim. Figure 37 illustrates an example bicycle tape application system 1020 having an example bicycle tape applicator 1030. Applicator 1030 is configured to be moved about bicycle rim 22 in the direction indicated by arrow 25. Applicator 1030 is similar to applicator 130 described above with respect to Figure 5 except that tape press 46 is supported by housing 40 and a forward or leading end of housing 40 such that tape press 46 leads rim guide 44 during the movement of applicator 1030 about rim 22 in the direction indicated by arrow 25. Similarly, tape tensioner 170 is also relocated to a position supported by housing 40 in front of tape press 46. Those components of system 1020 and applicator 1030 which correspond to components of system 120 and applicator 130 are numbered similarly and/or are described above with respect to applicator 130.

As shown by Figure 37, tape line 34 is peeled away from tape roll 32 and extends in a forward direction (rather than a rearward direction as with applicator 130) about tape tensioner 170 which reverses the direction of tape line 34 such a tape line 34 circles back towards rim guide 44 as it is pressed into rim 22 by tape press 46. **In** such implementations, applicator 1030 may additionally comprise a tape cutter as described above with respect to applicator 630. Although applicator 1030 is schematically illustrated, it should be appreciated that each of the schematically illustrated components may comprise any of the corresponding components described above with respect to applicators 230, 430 and 630 (with the revised locations shown in Figure 37).

Figure 38 illustrates an example bicycle tape application system 1120 having an example bicycle tape applicator 1130. Applicator 1130 is configured to be moved about bicycle rim 22 in the direction indicated by arrow 25. Applicator 1130 is similar to applicator 1030 described above except tape roll holder 42 is supported by housing 40 so as to support the tape roll 32 such that it's or axes of rotation is forward tape press 46 and forward rim guide 44. In addition, tape tensioner 170 is supported by housing 40 at a location longitudinally between tape roll holder 42 and tape press 46. Those components of system 1120 and applicator 1130 which correspond to components of system 120 and applicator 130 are numbered similarly and/or are described above with respect to applicator 130.

As shown by Figure 38, tape line 34 is peeled away from tape roll 32 and extends in a rearward direction about tape tensioner 170. Tape tensioner 170 has a centerline 171 that is forward of a plane containing the center a rotational axis of tape roll 32 and the most forward point where tape press 46 engages tape line 34. Tape line 34 extends from roll 32, passes about tape tensioner 170 and further extends towards rim guide 44, beneath tape press 46 which presses tape line 34 into the floor or channel of rim 22. In such implementations, applicator 1130 may additionally comprise a tape cutter as described above with respect to applicator 630. Although applicator 1130 is schematically illustrated, it should be appreciated that each of the schematically illustrated components may comprise any of the corresponding components described above with respect to applicators 230, 430 and 630 (with the revised locations shown in Figure 38).

Although the claims of the present disclosure are generally directed to a bicycle tape applicator, the present disclosure is additionally directed to the features set forth in the following definitions.
1. A bicycle tape applicator comprising:
   a portable housing for being manually moved along a bicycle rim;
   a tape roll holder supported by the housing;
   a rim guide at a front of the housing; and
   a tape press at a rear of the housing.
2. The bicycle tape applicator of Definition 1, wherein the rim guide comprises a wheel rotatably supported by the housing.
3. The bicycle tape applicator of Definition 2, wherein the rim guide comprises a center aligned with a vertical midplane of the wheel and opposite taper surfaces tapering away from opposite sides of the vertical midplane.
4. The bicycle tape applicator of Definition 3, wherein the rim guide comprises a body fixed to the housing and shaped to include the opposite taper surfaces.
5. The bicycle tape applicator of Definition 4, wherein opposite taper surfaces are linear.
6. The bicycle tape applicator of Definition 4, wherein the opposite taper surfaces are curved.
7. The bicycle tape applicator of Definition 2, wherein the rim guide comprises a guide wheel rotatably supported by the housing, the guide wheel having an outer surface including the opposite taper surfaces.
8. The bicycle tape applicator of Definition 1, wherein the rim comprises a floor, a first side wall rising from the floor and a second side wall rising from the floor and wherein the rim guide comprises a surface configured to contact and move along the first side wall as tape from a held tape roll is applied to the rim.
9. The bicycle tape applicator of Definition 8, wherein the rim guide further comprises a second surface contacting moving along the second side wall as tape from the held tape roll is applied to the rim.
10. The bicycle tape applicator of Definition 9 further comprising:
   a first prong extending from the housing and providing the surface; and
   a second prong extending from the housing and providing the second surface.
11. The bicycle tape applicator of Definition 10, wherein the surface and the second surface contact an interior side of the first side wall and the second side wall, respectively.
12. The bicycle tape applicator of Definition 10, wherein the surface and the second surface contact an exterior side of the first side wall and the second side wall, respectively.
13. The bicycle tape applicator Definition 9, wherein the surface and the second surface comprise symmetrical tapered sloped surfaces configured to contact and slide along interior sides of the first side wall and the second side wall, respectively.
14. The bicycle tape applicator of Definition 8 further comprising a prong extending from the housing, the prong providing the surface.
15. The bicycle tape applicator of any of Definitions 1-14, wherein the tape press comprises a pressing wheel rotatably supported by the housing.
16. The bicycle tape applicator of Definition 15, wherein the rim guide has a first width and wherein the pressing wheel has a second width less than the first width.
17. The bicycle tape applicator of Definition 16, wherein the second width is no greater than 50% of the first width.
18. The bicycle tape applicator of any of Definitions 1-14, wherein the rim guide has a first width and wherein the tape press comprises a pressing finger having a second width less than the first width.
19. The bicycle tape applicator of Definition 18, wherein the second width is no greater than 50% of the first width.
20. The bicycle tape applicator of Definition 1, wherein the bicycle tape applicator is configured to apply a tape to an interior of a bicycle rim having a floor and a recessed channel extending from and below the floor, wherein the tape press is configured to be at least partially received within the recessed channel to press the tape into the recessed channel.
21. The bicycle tape applicator of any of Definitions 1-20 further comprising a tape tensioner configured to peal tape from a tape roll held by the tape roll holder, wherein the tape tensioner is configured to place the tape in tension as a line of the tape extends from across the tape tensioner to the tape press.
22. The bicycle tape applicator of Definition 21, wherein the tape tensioner and the tape press are relatively positioned to support the tape line at an angle of at least 85° and no greater than 95° with respect to a line intersecting a rotational axis of the rim and a channel floor contacting surface of the tape press.
23. The bicycle tape applicator of any of Definitions 21-22, wherein the tape tensioner comprises a fixed tape bar supported by the housing.
24. The bicycle tape applicator of any of Definitions 21-22, wherein the tape tensioner comprises a roller rotatably supported by the housing.
25. The bicycle tape applicator Definition 1 further comprising a tape tensioner configured to peal tape from a tape roll held by the tape roll holder, wherein the tape tensioner is configured to place the tape in tension as a line of the tape extends from across the tape tensioner to the tape press, wherein the tape press comprises a pressing wheel rotatably supported about a pressing wheel rotational axis by the housing and wherein the tape tensioner and the tape press are relatively positioned to support the tape line at an angle of at least 85° and no greater than 95° with respect to a line intersecting the rotational axis of the rim and the rotational axis of the pressing wheel.
26. The bicycle tape applicator of any of Definitions 1-25, wherein the tape roll holder is configured to center a held tape roll with respect to the tape press.
27. The bicycle tape applicator of Definition 26, wherein the tape roll holder comprises a pair of opposite tapered sloping symmetrical faces configured to engage opposite outer edges of the held tape roll.
28. The bicycle tape applicator of any of Definitions 26, wherein the tape roll holder comprises opposing tapered sloping symmetrical faces about a centerline of the tape press and configured to engage opposite outer edges of the tape roll held by the tape roll holder to center the tape roll relative to the tape press.
29. The bicycle tape applicator of any of claims 1-26, wherein the tape roll holder comprises a hub configured to project into a center of a held tape roll, the hub comprising opposing tapered sloping symmetrical faces about a centerline of the tape press and configured to engage opposite inner edges of the tape roll held by the tape roll holder to center the tape roll relative to the tape press.
30. The bicycle tape applicator of Definition 29, wherein the hub comprises three fingers having outer ends configured to engage the held tape roll, a first one of the three fingers being radially movable.
31. The bicycle tape applicator of Definition 29, wherein the hub is releasably connected to the housing and comprises two fingers having outer ends, wherein at least one of the fingers is resiliently in a radial outward direction.
32. The bicycle tape applicator of Definition 26, wherein the tape roll holder comprises opposing parallel faces configured to extend perpendicular to a rotational axis of a held tape roll while engaging opposite sides of the held tape roll.
33. The bicycle tape applicator of Definition 26, wherein the tape roll holder comprises tape block configured to extend through a held tape roll, the block having a pair of opposite tapered sloping symmetrical faces configured to engage opposite inner edges of the held tape roll, wherein the tape block is resiliently biased towards the opposite inner edges.
34. The bicycle tape applicator of Definition 1, wherein the tape roll holder comprises:
   a plurality of roll bars rotatably supported by the housing, the plurality roll bars being spaced to contact circumferential faces of a held tape roll; and
   a tape roll centering clamping bar releasably connected to the housing while being configured to extend through a center of a held tape roll, engaging opposite side edges of the held tape roll.
35. The bicycle tape applicator of Definition 34, wherein the tape roll holder further comprises at least one tape roll centering block having a pair of opposite tapered sloping symmetrical faces configured to engage opposite inner edges of the held tape roll, wherein the tape block is resiliently biased towards the opposite inner edges.
36. The bicycle tape applicator of any of Definitions 1-35 further comprising a tape cutter supported by the housing.
37. The bicycle tape applicator of Definition 36, wherein the tape cutter comprises a cutting blade carried by the housing, the cutting blade movable between an extended position projecting from the housing and a retracted position contained within the housing.
38. The bicycle tape applicator of Definition 36, wherein the tape cutter comprises:
   a tape cutting edge;
   a cutter support carrying the tape cutting edge and rotatably supported by the housing for rotation about an axis between a tape disengaged position in which the tape cutting edge is withdrawn from tape held by the tape roll holder and a tape cutting position in which the tape cutting edge cuts the tape;
   a bias mechanism applying a resilient bias to the cutter support towards the tape disengaged position; and
   a rim bumper carried by the cutter support and configured to contact the bicycle rim in response to rotation of the housing about the axis, wherein contact of the rim bumper with the bicycle rim rotates the cutter support relative to the housing against the bias to move the cutting edge to the tape cutting position.
39. The bicycle tape applicator of any of Definitions 1-38, wherein the bicycle tape applicator is part of a bicycle tape application system that further comprises a tape roll of tape held by the tape roll holder.
40. The bicycle tape applicator of Definition 39, wherein the tape has a sticky face and a non-sticky face, the bicycle tape applicator further comprising a tape tensioner configured to peal the tape from the tape roll held by the tape roll holder, wherein the tape tensioner is in contact with the non-sticky face of the tape and is configured to place the tape in tension as a line of the tape extends from across the tape tensioner to the tape press.
41. The bicycle tape applicator of any of Definitions 1-41, wherein the tape roll holder is configured to removably receive a cartridge containing a tape roll of tape.
42. The bicycle tape applicator of Definition 1, wherein the bicycle tape applicator is part of a bicycle tape application system further comprising a cartridge, the cartridge containing a tape roll of tape and a tape tensioner pealing the tape from the tape roll and configured to place the tape in tension as a line of the tape extends from across the tape tensioner to the tape press, and wherein the tape roll holder is configured to releasably secure the cartridge to the housing.
43. The bicycle tape applicator of any of Definitions 1-42, wherein the applicator has a weight of less than 7 pounds.
44. The bicycle tape applicator of Definition 1 further comprising a tape roll of tape held by the tape roll holder.

Although the present disclosure has been described with reference to example implementations, workers skilled in the art will recognize that changes may be made in form and detail without departing from the scope of the claimed subject matter. For example, although different example implementations may have been described as including features providing benefits, it is contemplated that the described features may be interchanged with one another or alternatively be combined with one another in the described example implementations or in other alternative implementations. Because the technology of the present disclosure is relatively complex, not all changes in the technology are foreseeable. The present disclosure described with reference to the example implementations and set forth in the following claims is manifestly intended to be as broad as possible. For example, unless specifically otherwise noted, the claims reciting a single particular element also encompass a plurality of such particular elements. The terms "first", "second", "third" and so on in the claims merely distinguish different elements and, unless otherwise stated, are not to be specifically associated with a particular order or particular numbering of elements in the disclosure.

## Claims

1. A bicycle tape applicator comprising:
a portable housing for being manually moved along a bicycle rim;
a tape roll holder supported by the portable housing;
a rim guide at a front of the housing; and
a tape press at a rear of the housing.

2. The bicycle tape applicator of claim 1, wherein the rim guide comprises a wheel rotatably supported by the housing.

3. The bicycle tape applicator of claim 1 or 2, wherein the rim guide has an outer surface including the opposite taper surfaces.

4. The bicycle tape applicator of any preceding claim, wherein the bicycle rim comprises a floor, a first side wall rising from the floor and a second side wall rising from the floor and wherein the rim guide comprises a surface configured to contact and move along the first side wall as tape from a held tape roll is applied to the rim, optionally wherein the rim guide further comprises a second surface contacting moving along the second side wall as tape from the held tape roll is applied to the rim.

5. The bicycle tape applicator of any preceding claim, wherein the tape press comprises a pressing wheel rotatably supported by the housing.

6. The bicycle tape applicator of claim 5, wherein the rim guide has a first width and wherein the pressing wheel has a second width less than the first width, optionally wherein the second width is no greater than 50% of the first width.

7. The bicycle tape applicator of any preceding claim, wherein the bicycle tape applicator is configured to apply a tape to an interior of the bicycle rim, the bicycle rim having a floor and a recessed channel extending from and below the floor, wherein the tape press is configured to be at least partially received within the recessed channel to press the tape into the recessed channel.

8. The bicycle tape applicator of any preceding claim, further comprising a tape tensioner configured to peal tape from a tape roll held by the tape roll holder, wherein the tape tensioner is configured to place the tape in tension as a line of the tape extends from across the tape tensioner to the tape press, optionally wherein the tape tensioner and the tape press are relatively positioned to support the line of tape at an angle of at least 85° and no greater than 95° with respect to a line intersecting a rotational axis of the rim and a channel floor contacting surface of the tape press.

9. The bicycle tape applicator of any one of claims 1 to 4, further comprising a tape tensioner configured to peal tape from a tape roll held by the tape roll holder, wherein the tape tensioner is configured to place the tape in tension as a line of the tape extends from across the tape tensioner to the tape press, wherein the tape press comprises a pressing wheel rotatably supported about a pressing wheel rotational axis by the housing and wherein the tape tensioner and the tape press are relatively positioned to support the line of the tape at an angle of at least 85° and no greater than 95° with respect to a line intersecting the rotational axis of the rim and the rotational axis of the pressing wheel.

10. The bicycle tape applicator of any preceding claim, wherein the tape roll holder is configured to center a held tape roll with respect to the tape press, optionally wherein the tape roll holder comprises a pair of opposite tapered sloping symmetrical faces configured to engage opposite outer edges of the held tape roll.

11. The bicycle tape applicator of any preceding claim, wherein the tape roll holder comprises a hub configured to project into a center of a held tape roll, the hub comprising opposing tapered sloping symmetrical faces about a centerline of the tape press and configured to engage opposite inner edges of the tape roll held by the tape roll holder to center the tape roll relative to the tape press.

12. The bicycle tape applicator of claim 11, wherein the hub comprises three fingers having outer ends configured to engage the held tape roll, a first one of the three fingers being radially movable.

13. The bicycle tape applicator of claim 11, wherein the hub is releasably connected to the housing and comprises two fingers having outer ends, wherein at least one of the fingers is resiliently moveable in a radial outward direction, optionally wherein the tape roll holder comprises opposing parallel faces configured to extend perpendicular to a rotational axis of the held tape roll while engaging opposite sides of the held tape roll.

14. The bicycle tape applicator of any preceding claim, further comprising a tape cutter supported by the housing.

15. The bicycle tape applicator of claim 14, wherein the tape cutter comprises:
a tape cutting edge;
a cutter support carrying the tape cutting edge and rotatably supported by the housing for rotation about an axis between a tape disengaged position in which the tape cutting edge is withdrawn from tape held by the tape roll holder and a tape cutting position in which the tape cutting edge cuts the tape;
a bias mechanism applying a resilient bias to the cutter support towards the tape disengaged position; and
a rim bumper carried by the cutter support and configured to contact the bicycle rim in response to rotation of the housing about the axis, wherein contact of the rim bumper with the bicycle rim rotates the cutter support relative to the housing against the resilient bias to move the cutting edge to the tape cutting position.
